# EUROPEAN PATENT SPECIFICATION

(11) **EP 3 250 513 B1**
(45) Date of publication and mention of the grant of the patent: **17.12.2025**
(21) Application number: 16701467.9
(22) Date of filing: 22.01.2016
(51) Int. Cl.: F16K 31/524, F16K 31/528, C02F 1/00

(54) **VALVE AND CARTRIDGE COMPRISING A VALVE ACTUATING DEVICE FOR A LIQUID TREATMENT SYSTEM**
VENTIL UND KARTUSCHE MIT EINER VENTILBETÄTIGUNGSVORRICHTUNG FÜR EIN FLÜSSIGKEITSBEHANDLUNGSSYSTEM
VANNE ET CARTOUCHE AVEC UN DISPOSITIF D'ACTIONNEMENT DE LA VANNE POUR UN SYSTÈME DE TRAITEMENT DE LIQUIDE

(30) Priority: 26.01.2015 EP 15152525
(43) Date of publication of application: 06.12.2017
(60) Divisional application: 20204695.9
(73) Proprietor: BRITA SE, 65232 Taunusstein (DE)
(72) Inventor: HOTHER, Stefan, 65197 Wiesbaden (DE); SCHULER, Tobias, 63303 Dreieich (DE); NAMUR, Marc, 64297 Darmstadt (DE)
(74) Representative: Meissner Bolte Düsseldorf Patentanwälte Rechtsanwälte Partnerschaft mbB
(86) International application number: PCT/EP2016/051364
(87) International publication number: WO 2016/120174

(56) References cited:
- EP-A1- 2 387 547
- EP-B1- 2 387 547
- WO-A1-2012/150466
- US-A- 4 519 263

## Description

The invention relates to a valve for regulating a flow of liquid through a channel in a wall of a cartridge seat of a liquid treatment system, the valve including at least:
a valve body defining at least one port; and
at least one movable valve component, movable with respect to the valve body,
the at least one movable valve component including a regulating part for selectively obstructing a flow of liquid through the at least one port and an actuating part for engaging a valve actuating device when the valve actuating device is inserted into the cartridge seat, the regulating part being movable with respect to the valve body to block the port to a degree depending on its position.

The invention also relates to a reservoir for a liquid treatment system.

WO 2012/150466 A1 discloses a water treatment cartridge comprising a body which is filled with filter material, e.g. activated carbon and an ionic exchange medium. An upper surface of the body has inlets in it to allow water to flow into the cartridge, the inlets comprising a grille and mesh which prevent foreign bodies passing into the cartridge and retain the filter material within the body of the cartridge. A base of the cartridge includes a narrow recess that contains a downwardly projecting annular spigot which surrounds an outlet hole. Two further outlet holes are provided in the base of the cartridge. The outlet holes allow treated water to flow out of the cartridge. A hopper of a water treatment appliance, e.g. a water filter jug, comprises a lower portion-with slightly tapering walls into which the cartridge is inserted, and an upper concave portion into which water is poured, so that it can be filtered by passing through the cartridge and the filter material that it contains. A base of the lower portion of the hopper comprises an outlet. The outlet comprises a valve within an inwardly projecting protrusion. The valve includes a tiltable valve member which has to be opened to allow water to flow out of the hopper through the outlet. The recess and the annular spigot on the base of the cartridge are shaped to accommodate the inward protrusion of the hopper outlet. When the cartridge is inserted into this type of hopper, the spigot contacts the sloping shoulder at the top of the valve member to tilt it away from its resting position, thereby allowing water to flow out of the hopper.

WO 2010/081845 A1 (EP 2 387 547 B1) discloses a liquid treatment device in the shape of a water filtering device, which is provided with a liquid receptacle to hold unfiltered water and, below it, a collecting receptacle to receive filtered water. The liquid receptacle has a bottom wall, in which a receiving chamber is arranged. The receiving chamber is formed by a peripheral wall and a bottom wall. Into this receiving chamber, which has an outlet opening in the bottom wall, is inserted a liquid treatment cartridge having a sealing edge, a cartridge wall and a cartridge bottom. A valve having a valve seat body with a valve seat in the form of a moulded-on sealing ring is inserted into the outlet opening from below. Lying against the valve seat, fashioned as a sealing ring, is a shutoff body, which has a sealing disk interacting with the valve seat, on the underside of which a ball-shaped protrusion is arranged and on the upper side of which an element in the form of a lever is arranged. The element that is fashioned as a lever is provided with a cam surface on the outside. When the filter cartridge is fully and sealingly inserted in the receiving chamber, the sealing edge of the filter cartridge lies tightly against the inside of the peripheral wall of the receiving chamber. This prevents liquid from the liquid receptacle from being able to reach the receiving chamber untreated and thus from this receiving chamber into the collecting receptacle located underneath. The filter cartridge is provided with an indentation, on the underside of which is formed a valve actuation device in the form of an annular mandrel. This annular mandrel dips into the indentation of the receiving chamber and extends into the region of the lever, so that the inner surface of the annular mandrel engages with the cam surface of the lever. In this way, the shutoff body is brought into a tilt position, so that the valve opening, which is delimited by the valve seat, is freed.

A problem with tilting a shutoff body is that it is only lifted out of the valve seat on one side. To create a large passage for the water would require tilting the shutoff body over a large angle. However, its range of movement is constrained by the inner surface of the annular mandrel.

It is an object of the invention to provide a valve and reservoir of the types mentioned above in the opening paragraphs that provide for an alternative mechanism for opening and at least partially closing the valve that can be kept relatively compact.

This object is achieved according to a first aspect by the valve according to the invention, which is defined in claim 1.

The valve for regulating a flow of liquid through a channel in a wall of a cartridge seat of a liquid treatment system can be arranged to allow liquid to flow when a valve actuating device of the correct type has completely and correctly engaged the actuating part. In other situations, the flow of liquid is reduced with respect to this situation, e.g. essentially to a state of absence of flow. One can regard the valve as being in a closed state in this situation. The valve actuating device may be part of a liquid treatment cartridge for placement in the cartridge seat or part of an adapter for use with such a liquid treatment cartridge. The cartridge seat is generally part of a barrier separating an upstream part of a liquid treatment system from a downstream part where treated liquid is collected. If an attempt is made to insert a cartridge of a different type than the intended one or if no cartridge is correctly placed in the cartridge seat, it is possible to signal to a user that this is the case. Where the flow of liquid is blocked in such situations, incorrectly treated or untreated liquid does not pass the cartridge seat. Where it is merely starkly reduced with respect to the open configuration, this provides at least a signal to the user. The valve includes at least one valve body defining at least one port, permeable to liquid and in fluid communication with the channel. The at least one movable valve component includes a regulating part. The regulating part is movable with respect to the body to block the port to a degree dependent on its position, which for present purposes includes its orientation. The at least one movable valve component includes an actuating part for engaging a valve actuating device inserted into the cartridge seat. The valve actuating device will in most cases be part of a liquid treatment cartridge for placement in the cartridge seat. Practically such a cartridge will be placed in the cartridge seat by moving it towards the cartridge seat in a direction generally referred to herein as an axial direction. Because the actuating part is comprised in a mechanism for converting linear motion of a valve actuating device into rotary motion of the at least one movable valve component and includes a member of each of at least one pair of a spiral contour and a part for engaging the spiral contour, a relatively compact mechanism is provided for converting the movement in axial direction of the valve actuating device into rotary motion about the axis or a parallel axis. Linkages are not required. Furthermore, the movable valve component is not tilted. It can be moved in front of or fully out of overlap with the at least one port, in one embodiment. Alternatively, the rotary motion can be further converted into linear motion in opposite axial direction to lift it completely out of a valve seat. In either case, no part of the movable valve component need move sideways with respect to the axis of rotation. Thus, the rate of flow in the open configuration can be relatively high but the valve can have relatively small lateral dimensions. In particular where the cartridge seat is constructed so that the cartridge, once fully placed in the cartridge seat, surrounds the part of the cartridge seat in which the valve is provided, this allows for the use of cartridges with a relatively high volume. The valve is particularly suitable for gravity-driven systems. In such systems, there is a barrier separating an upstream part from a downstream part, with the cartridge seat provided in the barrier. The upstream part is at a higher level, in use, than the downstream part. Generally, the liquid treatment cartridge will be inserted into the cartridge seat in a downward direction, because the upstream part is more accessible. The proposed mechanism for converting linear downward motion of the cartridge into motion of the regulating part to move the valve out of the closed configuration is more compact than, for example, alternatives using a first-class lever for lifting the regulating part out of a valve seat.

The spiral contour may be a helical contour, i.e. have a constant helix angle. It need not extend over a complete turn. Generally, it will have a constant radius with respect to the axis about which it turns. Thus, the term spiral is used here in the same sense as when used to describe a winding groove in the side of a cylinder.

In an embodiment, the regulating part and the actuating part are integral parts of a single body forming a movable valve component.

An effect is to reduce the number of separate component parts of the valve. The single movable valve element can be a single body, thus a single component. Such a body may be obtainable by moulding, e.g. injection-moulding. The body may be made of a single material, e.g. plastic. Alternatively, it can be made of several materials, e.g. co-moulded plastics.

In a variant of this embodiment, the body forming the movable valve component includes a recessed section between the actuating part and the regulating part.

An effect is to allow liquid to flow past the movable valve part in axial direction with less resistance. The at least one recessed section is at an axial location between the actuating part and the regulating part, where the reference axis is the axis of rotation. A further effect is that the valve part can be lighter, requiring less material. The actuating part and the regulating part can have a relatively large diameter. The force required to rotate the movable valve part can thus be smaller. The angle about which the regulating part must be rotated in order to free the port completely can be smaller.

In an embodiment of the valve, the spiral contours are defined by spiral grooves for receiving the parts for engaging the spiral contour.

An effect is to allow the valve to be both opened and closed through the interaction between the valve actuating device and the actuating part of the movable valve component. Thus, if the valve actuating device is comprised in a liquid treatment cartridge, the valve can be opened when the cartridge is placed into the seat and closed when it is moved out of the seat in opposite direction. The grooved contour provides opposed spiral guide surfaces for engaging a follower. One is engaged when the follower is moved in one axial direction and the other when the follower is moved in the opposite axial direction. In effect, the actuating part of the movable valve component is shaped like a barrel cam.

In a variant of this embodiment, the grooves widen towards an axial end of the actuating part with respect to an axis of rotation of the at least one movable valve component.

This makes it easier to insert the follower into the grooved contour where perfect alignment between the valve actuating device and the actuating part prior to engagement is relatively difficult to achieve.

In an embodiment of the valve, the actuating part includes at least one of the at least one spiral contours.

The valve actuating device, which is usually provided on the liquid treatment cartridge or an adapter forming a kit with the cartridge should be relatively simple, because both parts are intended for single use or use on a limited number of occasions. The parts defining the contours are relatively intricate, if the contours are defined by grooves, so that at least the actuating part should include them. The actuating part is comprised in the valve of the cartridge seat, which is designed to have a longer lifespan and may therefore be more expensive to manufacture than the valve actuating device.

In an embodiment of the valve, the at least one part for engaging a spiral contour includes at least a section of a protruding screw thread.

This provides for relatively reliable conversion of linear motion into rotary motion. Spiral surfaces (one comprised in the spiral contour and the other on the protruding screw thread) slide along each other. A proper screw drive, as opposed to a cam-and-follower configuration, is thus provided.

In an embodiment, the at least one members of the mechanism included in the actuating part are provided radially on the outside of the actuating part.

The at least one members of the actuating mechanism included in the actuating part thus face radially outwards. In this embodiment, the actuating part can have a relatively small diameter and need not be hollow. This makes the movable valve component more robust.

In a variant of this embodiment, the actuating part is surrounded by a collar extending in axial direction to define a space for receiving a hollow projecting part of the actuating device, and the collar and the actuating part are integral parts of a single body forming a movable valve component.

This allows the actuating device to be provided with a hollow projecting part, on an inside surface of which elements of the pair of the at least one spiral contour and the part for engaging the spiral contour are provided. The collar serves to restrict movement of the movable valve component relative to the valve body, e.g. when the cartridge seat is turned upside down. This might be the case where the cartridge seat is comprised in a liquid treatment system component intended to be cleaned in a dishwasher machine. An inwardly projecting flange may interact with the collar to limit its range of axial movement with respect to the valve body. The collar may also play a role in restricting lateral movement or tipping of the movable valve component with respect to an axis aligned with or parallel to the axis of rotation.

In an embodiment, the mechanism includes multiple parts for engaging a spiral contour and multiple spiral contours.

Forces exerted off-axis (relative to the axis of rotation) might otherwise tend to tilt the actuating part of the movable valve component, whereas it is desirable to have it essentially only rotate about an axis aligned with the direction of insertion of the valve actuating device. Multiple points of engagement between spiral contours and engaging element can be distributed evenly about the axis to counter the risk of tilting.

In a variant of this embodiment, the parts for engaging a spiral contour are fewer in number than the spiral contours for engaging them.

An effect is that there are more rotary positions of the valve actuating part at which the engaging elements can enter into engagement with the contours. This makes it easier to move the valve actuating part into the cartridge seat in a correct rotary position.

In an embodiment of the valve, the valve body includes at least one, e.g. a series of, inclined surface(s) facing at least partly in axial direction and partly in tangential direction with respect to an axis of rotation of the at least one movable valve component, and the at least one inclined surfaces are arranged to support at least one of the at least one movable valve components in at least positions of the movable valve component allowing liquid to flow through the port.

The axis of rotation will generally be an upright axis, so that gravity will pull the valve component towards the inclined surface(s). Because they face partly in axial direction and partly in tangential direction with respect to an axis of rotation of the at least one movable valve component, the parts of the supported movable valve component supported by the inclined surface(s) will slide down them, at least when shaken slightly to overcome static friction. The valve component will rotate in the process. This is one implementation of biasing mechanism for moving the valve component into one of a limited number of rotary positions in the absence of engagement with the valve actuating device.

In a variant, the at least one inclined surfaces define a series of crests and troughs arranged about the axis of rotation, e.g. essentially encircling the axis of rotation.

There are thus multiple such default rotary positions. Only a slight rotation and limited axial movement of the movable valve component is required for it to attain one of them.

In a variant of the embodiment in which the valve body includes at least one, e.g. a series of, inclined surface(s) facing at least partly in axial direction and partly in tangential direction with respect to an axis of rotation of the at least one movable valve component and the at least one inclined surfaces are arranged to support at least one of the at least one movable valve components in at least positions of the movable valve component allowing liquid to flow through the port, the at least one inclined surfaces further face partly in radial direction, e.g. radially inwards.

An effect is also to centre the supported movable valve component, e.g. at least the regulating part, with an axis corresponding to or parallel to the intended axis of rotation. A small range of axial movement of this component with respect to the valve body is possible, even with only a relatively small force acting on it, because further contact to journal the movable valve component part can be minimised.

In a particular variant of the embodiment in which the valve body includes at least one, e.g. a series of, inclined surface(s) facing at least partly in axial direction and partly in tangential direction with respect to an axis of rotation of the at least one movable valve component and the at least one inclined surfaces are arranged to support at least one of the at least one movable valve components in at least positions of the movable valve component allowing liquid to flow through the port, the supported movable valve component includes a plurality of crests protruding in axial direction towards the supporting surfaces.

This ensures that the supported movable valve component can actually slide down the inclined surface(s) relatively unhindered. The inclined surface(s) can enter the troughs between the crests. The supported movable valve component can be relatively small without becoming too filigreed.

In a variant hereof, the crests of the supported movable valve component are defined by inclined surfaces, e.g. having an angle of inclination essentially matching that of the inclined surfaces supporting the movable valve component.

In this variant, the crests can slide down the inclined surface(s) relatively easily.

In a variant of the embodiment in which the valve body includes at least one, e.g. a series of, inclined surface(s) facing at least partly in axial direction and partly in tangential direction with respect to an axis of rotation of the at least one movable valve component and the at least one inclined surfaces are arranged to support at least one of the at least one movable valve components in at least positions of the movable valve component allowing liquid to flow through the port, the valve body includes a sealing surface for engaging the regulating part that is separate from the inclined surfaces.

Thus, the inclined surface(s) and the sealing surface can be optimised for their respective purposes. The inclined surface(s) bias(es) the supported movable valve part into one of a limited number of default positions. The sealing surface provides good sealing, so as essentially to block any flow of liquid when the supported movable valve part is in such a default positon. The inclined surface(s) can be made relatively hard and smooth to provide little friction. The sealing surface can be made softer, even of a different material. Alternatively, the inclined surface(s) and the sealing surface can be coated differently, for example. Moreover, the angle of inclination and shape of the inclined surface(s) need not be kept within such tight tolerance ranges as would be the case if they were also to function as sealing surface(s).

In an embodiment of the valve, the valve body defines a valve seat for receiving the regulating part in which the port is provided.

With the port provided in the valve seat, the valve is moved out of the closed configuration by moving, e.g. lifting, the regulating part out of the valve seat. The valve seat can thus be sealed relatively well without increasing the resistance to movement of the movable valve component, as would be the case for a spool valve or sliding gate valve, for example.

In a variant of this embodiment, the valve body includes at least one, e.g. a series of, inclined surface(s) facing partly in axial direction and partly in tangential direction with respect to an axis of rotation of the at least one movable valve component including the regulating part, and the at least one inclined surfaces are arranged to support at least the movable valve component including the regulating part.

This solves the problem of how to move the regulating part into and out of the valve seat, given that the actuating part rotates when engaged by the valve actuating device. The orientation of the inclined surface(s) is such that the rotation causes lift and allows descent of the regulating part, depending on the direction of rotation. Thus, downward movement of the valve actuating device that engages the actuating part of the movable valve component causes rotation thereof, which in turn causes lift thereof with respect to the valve seat. The valve and the valve actuating device in effect form a screw drive mechanism for converting linear motion of the valve actuating device in one axial direction into linear motion of the at least one movable valve part in an opposite axial direction.

In a variant of the embodiment in which the valve body defines a valve seat for receiving the regulating part in which the port is provided, the valve seat is essentially conical and the regulating part includes a matching surface corresponding in shape to at least a section of a lateral surface of a cone.

An effect is to provide better sealing in the closed configuration of the valve. The matching surface is a conical or frusto-conical surface. The co-operating surfaces are essentially parallel and a self-centring effect is achieved.

In a variant of the embodiment in which the valve body defines a valve seat for receiving the regulating part in which the port is provided, the valve body includes at least one cross-bar, e.g. a lattice, across the port.

This avoids that extraneous parts passed through the port from the opposite side to that on which the regulating part is situated prevent proper closing of the valve.

In an embodiment, the movable valve component is made of a material having a density > 1·10³ kg·m⁻³. The material may, for example, have a density > 1.3·10³ kg·m⁻³. The movable valve component may, for example, have a bulk density > 1·10³ kg·m⁻³.

Thus, the movable valve component can be freely movable within a limited range with respect to the valve body, at least when not engaged by a valve actuating device. If it is submerged in water, it will stay in its intended position and not float up. This is of particular use where the valve body defines a valve seat for receiving the regulating part, in which valve seat the port is provided. The movable valve component will stay in the seat, assuming that the valve body is arranged to support the movable valve component in the closed configuration. The valve will thus remain in the closed configuration when the cartridge seat is submerged in water but no suitable liquid treatment cartridge is in the correct place in the cartridge seat. The bulk density is relevant if the movable valve component has closed voids in it, e.g. to reduce the amount of material needed to produce it.

In an embodiment, the movable valve component and valve body are made of different materials.

Each can thus be made of a material most suited to its intended purpose. For example, the material of the valve body can be selected for compatibility with the material of at least the section of the remainder of the cartridge seat with which it is in contact when mounted. The material of the movable valve component can be selected e.g. to have sufficient density for the movable valve component not to float in the liquid to be treated.

In an embodiment, the valve body includes a radially outer lateral surface that is at least one of conical and essentially cylindrical, e.g. circle-cylindrical, in shape.

This allows the valve body to be inserted into or fixed in a passage through the cartridge seat. The cartridge seat can have, for example, an axial end wall, in which a passage is defined. The valve can be mounted by inserting it into the passage, e.g. from the opposite side to the one on which the cartridge is to be located in use.

In a variant, a flange is provided at an axial end of the valve body with respect to an axis of rotation of the at least one movable valve component.

This facilitates the mounting of the valve, in particular the valve body, in the type of cartridge seat just described. The body is inserted over a defined distance. Moreover, the flange contributes to preventing leaks between the valve body and the passage wall.

In an embodiment of the valve, at least an axial section of the movable valve component, which section includes at least an axial section of the regulating part, is received in a recess having an essentially circular cross-section and situated at an axial end of the valve body, e.g. an axial end opposite the axial end at which the flange is provided.

The movable valve component thus rotates at least partly within the valve body. Mounting of the valve is relatively simple, since the movable valve component can be placed in the recess before the valve body is mounted with relatively little risk of losing the valve component during mounting.

According to another aspect of the invention, a reservoir according to claim 4 is provided.

With respect to a reference axis, generally corresponding to or parallel to the axis of rotation of the at least one movable valve component, the cartridge seat comprises a chamber having an opening at one axial end. When the liquid treatment cartridge is inserted through the opening over a defined distance in axial direction, the liquid treatment cartridge is sealingly engaged along its circumference. Liquid can thus only enter the chamber through the cartridge, which is provided with at least one liquid-permeable inlet on an upstream side of the seal and at least one liquid-permeable outlet on a downstream side of the seal. A liquid channel is provided through a wall of the chamber, which is otherwise essentially closed. Thus, liquid that has passed through the cartridge into the chamber can leave the chamber, or liquid that has entered the chamber through the channel can leave through the cartridge, depending on the intended direction of flow. In a gravity-driven liquid treatment system, this depends on whether the cartridge seat is provided on a downstream side of the reservoir wall, in which case the cartridge is suspended from the reservoir, or whether it is provided in the reservoir, in which case the cartridge is inserted when the reservoir is empty and then filled with liquid to be treated. In either case, the reservoir is emptied through the liquid treatment cartridge. The valve regulates the flow of liquid to ensure that the reservoir can only be emptied at a normal rate of flow when a valve actuating device has placed the valve in the open position. Otherwise, the valve will be closed, so that the rate of flow is appreciably lower or zero.

In an embodiment, at least a section of the liquid channel is defined by a cartridge seat part, the valve body is inserted into the liquid channel, and the at least one movable valve component is retained by and between the valve body and at least one section of the seat part protruding into the liquid channel.

This embodiment has a relatively low number of separate parts. The cartridge seat part can be a single part, e.g. an integral part of the reservoir. If there is only one movable valve component, the valve adds only two parts. The movable valve component can be a loose part, not joined to the valve body. However, a third part for preventing loss of the movable valve component is not required. There is in particular no need to provide a cage for holding the movable valve component. The protruding sections leave free an inlet of a space between the valve body and the protruding sections in which the movable valve component is held. Liquid can thus enter this space and leave through the at least one valve port when the valve is in the open configuration.

In a variant of this embodiment, the at least one protruding section of the cartridge seat part is at least one ridge projecting from a side wall of the liquid channel about a central opening.

Thus, access to the actuating part is provided, so that it may be engaged by the valve actuating device. A projecting end of the valve actuating device can be inserted through the central opening to engage the actuating part of the movable valve component.

In a particular variant hereof, at least two ridge ends are spaced apart in tangential direction to allow liquid to pass between them, in use.

The valve should be open to allow liquid to flow when the actuating device is in engagement with the actuating part, i.e. inserted through the central opening. To avoid restricting the flow through the valve too much, this variant allows liquid to flow past the actuating device through the space or spaces between the ridge ends. The inside edges of the ridge or ridges may indeed touch the inserted part of the actuating device, so that they fulfil a guidance function.

In an embodiment of the reservoir, the liquid channel is defined by a cartridge seat part made of the same material as the valve body.

This makes it easier to join the valve body to the cartridge seat by bonding, in particular welding. In a particular variant, the valve body is ultrasonically welded to the cartridge seat. The material of the movable valve component may differ from that of the valve body.

In an embodiment of the reservoir, at least a section of the liquid channel is defined by a cartridge seat part projecting with respect to at least a section of a chamber wall, e.g. a wall at an opposite axial end to the opening through which the liquid treatment cartridge is insertable.

The valve will generally have an appreciable height, exceeding the chamber wall thickness. In this embodiment, the wall can be relatively thin. If the chamber is open at the top, in use, then the wall will be the chamber bottom wall, in use. The projecting part can be comprised in that wall and surround the valve completely.

In a variant of this embodiment, the projecting cartridge seat part and the section of the chamber wall with respect to which it projects are integral parts of a single component.

No separate mounting of the projecting cartridge seat part is thus required. The projecting part can be no more than a protuberance of the chamber wall.

In a variant of the embodiment in which at least a section of the liquid channel is defined by a cartridge seat part projecting with respect to at least a section of a chamber wall, e.g. a wall at an opposite axial end to the opening through which the liquid treatment cartridge is insertable, the projecting cartridge seat part projects into the chamber.

In this variant, the reservoir can have few or no projecting parts on the outside that might be damaged during handling or in transit from the factory to the consumer. The projecting cartridge seat part is surrounded and shielded by the chamber walls. The cartridge may be provided with a recess in an axial end wall so as to envelop the projecting part when inserted. A cartridge of this type is described e.g. in US 2009/0294346 A1. With the opening of the chamber generally at the top, in use, some liquid is left in the chamber when the reservoir has been emptied through the cartridge. The liquid-permeable outlet or outlets of the cartridge can thus be kept submerged in liquid after the reservoir has been emptied. This can be useful where the liquid treatment cartridge includes a bacteriostatic substance that is eluted into the liquid and the liquid is a potable liquid such as drinking water. A further effect is that the reservoir has a reduced height. In embodiments in which the reservoir is suspended in a vessel for collecting treated liquid, this leaves more space for the treated liquid for a given overall height of the system.

In an embodiment of the reservoir, the chamber has a cross-sectional shape, seen perpendicular to the axis, that is elongated in shape, e.g. oval.

This applies at least to a cross-section near the opening of the chamber. The rest of the reservoir will generally have a matching shape. The shorter body axis of the reservoir and chamber can be sized with regard to the typical width of a refrigerator door compartment. The longer body axis can be relatively long to increase the cross-sectional area. These body axes can be axes of symmetry of the cross-sectional shape. The liquid treatment cartridge will generally have a matching cross-sectional shape, thus a relatively large volume and relatively low resistance to flow.

In an embodiment of the reservoir, the chamber is defined in an appendage to a bottom wall section of the reservoir.

This allows the reservoir to be completely emptied of liquid to be treated through the operation of gravity.

In an embodiment, the reservoir includes at least one external ridge for supporting the reservoir in an upper section of a vessel for collecting treated liquid.

This embodiment is for implementing a mainly or exclusively gravity-driven liquid treatment system in particular.

Disclosed but not claimed is a device for actuating the valve according to the invention, of which a section is comprised in a mechanism for converting linear motion of the actuating device in axial direction into rotary motion of the movable valve component and includes a member of each of at least one pair of a spiral contour and a part for engaging a spiral contour.

The actuating device is insertable in an axial direction through an opening for admitting liquid to the valve such that a section included in the inserted part engages an actuating part of a movable valve component. This movement may be an essentially linear movement, e.g. corresponding to the movement of a cartridge into the cartridge seat. Because the section is comprised in a mechanism for converting linear motion of the actuating device in axial direction into rotary motion of the movable valve component and includes a member of each of at least one pair of a spiral contour and a part for engaging a spiral contour, the linear motion is converted into rotary motion of the movable valve component that opens the valve.

In an embodiment of the valve actuating device, the section for engaging the actuating part of the movable valve component includes a hollow part for receiving at least an axial end section of the actuating part of the movable valve component, and the members of the mechanism included in the section for engaging the actuating part of the movable valve component are provided on an inward-facing surface of the hollow part.

Thus, the actuating part of the movable valve component can have a relatively small diameter yet be relatively robust, i.e. survive multiple engagements with the valve actuating device. For a given radial distance of the spiral contours to the axis of rotation, the valve component can have a relatively small diameter.

In a variant of this embodiment, the members of the mechanism included in the section for engaging the actuating part of the movable valve component protrude from the inward-facing surface of the hollow part.

The hollow part can have a relatively low wall thickness compared to one in which spiral contours in the form of grooves are provided. Such contours may be provided on the actuating part of the movable valve component instead.

In an embodiment, the section for engaging the actuating part of the movable valve component is at least partly, e.g. completely, arranged in a recess of the device.

This section is thus shielded to a large part. The risk of its sustaining damage that prevents it from being inserted through the opening of the valve is thus reduced. The section for engaging the actuating part may in particular include a hollow part for receiving at least an axial end section of the actuating part of the at least one movable valve component. This part may then be a relatively narrow cylindrical or conical column, for example.

In a variant of this embodiment, the recess is defined by a side wall closed on itself around and spaced apart radially from the section for engaging the actuating part of the movable valve component.

The radial spacing leaves room for liquid to flow to or from the opening of the valve.

In an embodiment, the section for engaging the actuating part of the movable valve component includes a hollow projecting part having a side wall provided with at least one interruption, the interruption extending over at least part of its axial extent to an edge at a free axial end of the hollow projecting part.

An effect is that the hollow projecting part can be deformed, e.g. compressed or widened, to provide an elastic force. This can be used to clamp or snap the hollow part to a cartridge seat part defining the channel and/or the opening through which the hollow part is insertable. The snap-fit connection or clamping force holds the actuating device in place, once inserted. Even if the hollow projecting part is not deformed in this way, the interruptions decrease the resistance to flow of the valve when the section of the valve actuating device has been inserted.

In an embodiment of the valve actuating device, the actuating device includes a part at a distance to the section for engaging the actuating part of the movable valve component for holding the actuating device in a cartridge seat including the valve.

Thus, at least the axial position of the actuating device is fixed, once it has moved the valve into the open configuration. It is thus ensured that the open configuration is maintained until a force sufficient to overcome the holding force is exerted on the valve actuating device.

In an embodiment of the valve actuating device, wherein the actuating device includes a vessel-shaped part and wherein the section for engaging the actuating part of the movable valve component is provided at a bottom wall at an axial end of the vessel-shaped part, the device further includes an outward-facing rim on a side-wall of the vessel-shaped part, extending around a circumference of the vessel-shaped part.

The vessel-shaped part may in particular be a vessel-shaped part of a liquid treatment cartridge. Alternatively, it may be part of an adapter, with the vessel-shaped part configured sealingly to receive a liquid treatment cartridge and in turn to be sealingly inserted into the cartridge seat. The outward-facing rim on the side wall engages the cartridge seat to prevent liquid from passing between the vessel-shaped part and the cartridge seat. Instead, the liquid is forced to flow through the vessel-shaped part.

Thus, in an embodiment, the actuating device includes a vessel-shaped part, the section for engaging the actuating part of the movable valve component is provided at a bottom wall at an axial end of the vessel-shaped part, and at least one liquid-permeable window is provided in the bottom wall.

In a variant of this embodiment, the at least one liquid-permeable window is provided adjacent the section for engaging the actuating part of the movable valve component.

Thus, liquid can flow around, rather than through, the section for engaging the actuating part of the at least one movable valve component. In particular where the section for engaging the actuating part is hollow and arranged to receive the actuating part, liquid cannot easily flow through such a section, because the actuating part will block the flow of liquid. Thus, it is not sufficient to provide the liquid-permeable window at an axial end of the hollow section opposite the axial end that is inserted into the opening of the valve.

In an embodiment of the device, the section for engaging the actuating part of the movable valve component includes the part(s) for engaging the spiral contour(s) of the mechanism, and the part(s) for engaging the spiral contour(s) are shaped for insertion into spiral grooves defining the spiral contours.

An effect is to allow the valve to be both opened and closed through the interaction between the valve actuating device and the actuating part of the movable valve component. Thus, if the valve actuating device is comprised in a liquid treatment cartridge, the valve can be opened when the cartridge is placed into the seat and closed when it is moved out of the seat in opposite direction. Each groove provides opposed spiral guide surfaces for engaging a follower. One is engaged when the follower is moved in one axial direction and the other when the follower is moved in the opposite axial direction. In effect, the actuating part of the movable valve component is shaped like a barrel cam.

In a variant of this embodiment, the part for engaging the spiral contour tapers towards an axial end of the section for engaging the actuating part of the movable valve component.

This makes it easier to insert it into the grooved contour.

In an embodiment, the section for engaging the actuating part of the movable valve component includes the part(s) for engaging the spiral contour(s) of the mechanism, the part for engaging the spiral contour including at least a section of a protruding screw thread.

A larger contact area ensures that tangential forces are spread over a larger axial distance. A better conversion of linear into rotary motion is achieved.

In an embodiment of the device, the mechanism includes multiple parts for engaging a spiral contour and multiple spiral contours.

Forces exerted off-axis (relative to the axis of rotation) might otherwise tend to tilt the actuating part of the movable valve component, whereas it is desirable to have it essentially only rotate about an axis aligned with the direction of insertion of the valve actuating device. Multiple points of engagement between spiral contours and engaging element can be distributed evenly around the axis to counter the risk of tilting.

In a variant of this embodiment, the parts of the mechanism with which the section for engaging the at least one actuating part of the movable valve component are provided are distributed essentially uniformly about a central axis of the section that is one of aligned with and parallel to the direction of insertion.

This further reduces the risk of tilting. Moreover, a certain degree of rotational symmetry can be achieved, so that there is not just one single rotary position of the valve actuating device that allows it to be inserted through the opening for admitting liquid and to engage the actuating part of the at least one movable valve component.

In a variant of the embodiment in which the mechanism includes multiple parts for engaging a spiral contour and multiple spiral contours, the parts for engaging a spiral contour are fewer in number than the spiral contours for engaging them.

An effect is that there are more rotary positions of the valve actuating part at which the engaging elements can enter into engagement with the contours. This makes it easier to move the valve actuating part into the cartridge seat in a correct rotary position. Furthermore, the valve actuating device is less difficult to manufacture, especially where the parts for engaging a spiral contour are provided on the inside surface of a hollow section for insertion through the valve opening and at least this hollow section is injection-moulded.

Also disclosed but not claimed is a liquid treatment cartridge having a housing, the housing including:
at least one liquid-permeable window forming a liquid inlet;
at least one liquid-permeable window forming a liquid outlet;
at least one treatment chamber, e.g. including a liquid treatment medium, situated between and in liquid communication with the liquid-permeable windows forming the liquid inlet(s) and outlet(s); and
a valve actuating device as described above.

The liquid treatment cartridge thus actuates the valve directly, provided the valve actuating device is of the correct shape and the cartridge is inserted correctly. The liquid then flows through the at least one liquid-permeable window forming a liquid inlet, through the treatment chamber and out of the at least one liquid-permeable window forming a liquid outlet.

In an embodiment of the liquid treatment cartridge, the housing is at least partially insertable through an opening of a chamber of a cartridge seat, wherein the housing includes at least one rim, extending about a circumference of the housing and closed on itself around an axis parallel to the direction of insertion.

The liquid treatment cartridge can be held and/or sealed against a side wall of the chamber to prevent a bypass of liquid between the cartridge housing and the chamber wall.

In a variant, the rim separates the liquid-permeable windows forming at least one liquid inlet from the liquid-permeable windows forming at least one liquid outlet.

Liquid is thus forced to flow through the housing.

In a variant of the embodiment in which the housing is at least partially insertable through an opening of a chamber of a cartridge seat, wherein the housing includes at least one rim, extending about a circumference of the housing and closed on itself around an axis parallel to the direction of insertion, the rim includes a radially inner section projecting at least partly in radial direction with respect to a side wall of the housing along the circumference of the housing.

There is thus space for the radially inner section to flex when the cartridge is inserted into the chamber of the cartridge seat. This provides an elastic force ensuring better sealing. The radially inner section may form a flexure bearing (also referred to as a living hinge) for a radially outer section of the rim, for example.

In a particular variant, the rim includes a radially outer section with at least one section at an angle to the radially inner section and presenting an at least partly radially outward-facing surface.

The radially inner section can thus be relatively thin. The radially outer section, due to the section at an angle to the radially inner section and presenting an at least partly radially outward-facing surface, nevertheless provides a relatively large area of contact with the co-operating surface of the cartridge seat. The flexing of the radially inner section allows the outward-facing surface to conform to the co-operating surface.

In a particular variant hereof, the radially outer section includes two sections at an angle to the radially inner section that extend in opposite axial directions.

The overall area of contact with the co-operating surface of the cartridge seat is increased.

In a particular variant of the variant in which the rim includes a radially outer section with at least one section at an angle to the radially inner section and presenting an at least partly radially outward-facing surface, one of the at least one sections of the radially outer section forms an upstanding ridge surrounding the liquid-permeable windows forming the at least one liquid inlet(s).

This allows liquid to be collected in a reservoir at the bottom of which the cartridge seat is provided.

In an embodiment of the liquid treatment cartridge, the housing includes a vessel-shaped part and a cap-shaped part closing the vessel-shaped part.

This embodiment is suitable for an implementation in which the treatment chamber includes loose, e.g. granular, liquid treatment media.

In a variant of this embodiment, the vessel-shaped part includes a flange at an open axial end and the cap-shaped part is placed on and attached to the flange.

An effect is to facilitate the formation of a bonded joint between the vessel-shaped part and the cap-shaped part. The cap-shaped part may in particular be welded, e.g. ultrasonically, to the vessel-shaped part, with the flange providing purchase for a tool, e.g. an anvil or sonotrode.

In a variant of the embodiment in which the housing is at least partially insertable through an opening of a chamber of a cartridge seat, the housing includes at least one rim, extending about a circumference of the housing and closed on itself around an axis parallel to the direction of insertion, the rim includes a radially inner section projecting at least partly in radial direction with respect to a side wall of the housing along the circumference of the housing, at least part of the radially inner section of the rim forms the flange.

The rim can thus be placed at the extreme axial end of the vessel-shaped part, since there is no need to leave space for a separate flange. The rim fulfils a dual role. The radially outer part of the rim may be left free, to enable a certain degree of flexing of the rim to take place when the liquid treatment cartridge is inserted into the cartridge seat. The cap-shaped part reinforces at least the radially inner section of the rim, which can therefore be relatively thin.

Disclosed but not claimed is an adapter for enabling the placing of a replaceable liquid treatment cartridge in a cartridge seat of a liquid treatment system, which adapter includes a valve actuating device as described above.

A manufacturer may use the adapter to produce a range of two or more liquid treatment cartridges having the same housing but different liquid treatment parts, e.g. different liquid treatment media arranged in a chamber through which the liquid passes in use. To ensure that the user of a particular liquid treatment system in which each of the liquid treatment cartridges fits only uses a particular intended one of the range of liquid treatment cartridges, they may be supplied in a kit, each with a different version of the adapter. The contour shape or spacing may determine whether the adapter is suitable for operating the valve. If it is not, the cartridge supplied with the adapter cannot be used.

Disclosed but not claimed therefore is a kit of parts for a liquid treatment system, which includes the adapter and a liquid treatment cartridge having a housing, the housing including:
at least one liquid-permeable window forming a liquid inlet;
at least one liquid-permeable window forming a liquid outlet;
at least one treatment chamber, e.g. including a liquid treatment medium, situated between and in liquid communication with the liquid-permeable windows forming the liquid inlet(s) and outlet(s).

Also disclosed but not claimed is a liquid treatment system including a reservoir according to the invention, a replaceable liquid treatment cartridge and a valve actuating device as described above.

The valve actuating device may be comprised in the liquid treatment cartridge or in a separate adapter.

The invention will be explained in further detail with reference to the accompanying drawings, in which (the valve actuating device, the liquid treatment cartridge, the adapter and the liquid treatment system are not claimed) :
- Fig. 1: is a plan view of a gravity-driven liquid treatment system including a reservoir for liquid to be treated;
- Fig. 2: is a perspective view of a first replaceable liquid treatment cartridge for the system;
- Fig. 3: is a front view of the liquid treatment cartridge of Fig. 2;
- Fig. 4: is a side view of the liquid treatment cartridge of Figs. 2 and 3;
- Fig. 5: is a cross-sectional view of the liquid treatment cartridge of Figs. 2-4;
- Fig. 6: is an enlargement of a detail of the view of Fig. 5 showing parts of a valve actuating device comprised in the liquid treatment cartridge;
- Fig. 7: is a cross-sectional view from the side of the liquid treatment cartridge of Figs. 2-6;
- Fig. 8: is an enlargement of a detail of the view of Fig. 7 showing parts of the valve actuating device;
- Fig. 9: is a perspective cross-sectional view of the liquid treatment cartridge of Figs. 2-8;
- Fig. 10: is a bottom view of the liquid treatment cartridge of Figs. 2-9;
- Fig. 11: is an enlargement of a detail of the view of Fig. 10 showing parts of the valve actuating device;
- Fig. 12: is a perspective view of the parts of the valve actuating device;
- Fig. 13: is a perspective cross-sectional view of the parts of the valve actuating device;
- Fig. 14: is a perspective view of a vessel-shaped component part of a housing of the liquid treatment cartridge of Figs. 2-13;
- Fig. 15: is a top view into the vessel-shaped component part of Fig. 14;
- Fig. 16: is a perspective view of a cap-shaped component part of the housing of the liquid treatment cartridge of Figs. 2-15;
- Fig. 17: is a perspective view from below of the cap-shaped component part of Fig. 16;
- Fig. 18: is a cross-sectional view of a lower section of the reservoir of the liquid treatment system of Fig. 1;
- Fig. 19: is a cross-sectional view of a cartridge seat with which the reservoir of Fig. 18 is provided;
- Fig. 20: is a perspective cross-sectional view of the cartridge seat;
- Fig. 21: is an enlargement of a detail of the view of Fig. 20;
- Fig. 22: is a perspective cross-sectional view showing the liquid treatment cartridge of Figs. 2-13 inserted into the cartridge seat of Figs. 20-21 and engaging a valve with which the cartridge seat is provided;
- Fig. 23: is a perspective view of a valve body of the valve;
- Fig. 24: is a second perspective view of the valve body of Fig. 24 from a slightly different angle;
- Fig. 25: is a perspective cross-sectional view of the valve body;
- Fig. 26: is a perspective view of a movable valve component of the valve of Figs. 22-25;
- Fig. 27: is a perspective view from a different angle of the movable valve component of Fig. 26;
- Fig. 28: is a perspective view from below of the movable valve component of Figs. 26-27;
- Fig. 29: is a perspective view from a further angle of the movable valve component of Figs. 26-28;
- Fig. 30: is a cross-sectional view of the movable valve component of Figs. 26-29;
- Fig. 31: is a perspective cross-sectional view of the cartridge seat of Figs. 19-22 and the valve of Figs. 23-30 in combination with an adapter including a valve actuating device for actuating the valve;
- Fig. 32: is a perspective view showing a bottom wall of a liquid treatment cartridge for use with the adapter of Fig. 31;
- Fig. 33: is a perspective view of the adapter of Fig. 32;
- Fig. 34: is a perspective view from below of the adapter of Figs. 32-33;
- Fig. 35: is a perspective view from below from a different angle of the adapter of Figs. 32-34;
- Fig. 36: is a perspective cross-sectional view of the adapter, the cartridge seat and the valve with the adapter engaging the valve;
- Fig. 37: is a partial cross-sectional view showing the cartridge seat, the valve, the adapter and the liquid treatment cartridge of Fig. 32; and
- Fig. 38: is a detailed cross-sectional view showing the adapter in engagement with the valve and received in a recess in a bottom wall of the liquid treatment cartridge of Fig. 32.

A gravity-driven liquid treatment system comprises a vessel for collecting treated liquid such as an aqueous liquid, in the illustrated example in the form of a jug 1. Alternative types of vessel include carafes and bottles.

A reservoir 2 in the shape of a funnel is suspended within the jug 1. To this end, the reservoir 2 is provided with an external ridge 3 running around most of its circumference. The external ridge 3 is supported by a ledge in a side wall, which ledge is situated at a mouth of the jug 1. The jug 1 with the reservoir 2 suspended therein is closed by a lid 4 in which a fill opening is defined. The fill opening is closed by a closure element 5. The reservoir 2 is situated adjacent a pouring spout 6, so that it need not be removed during use.

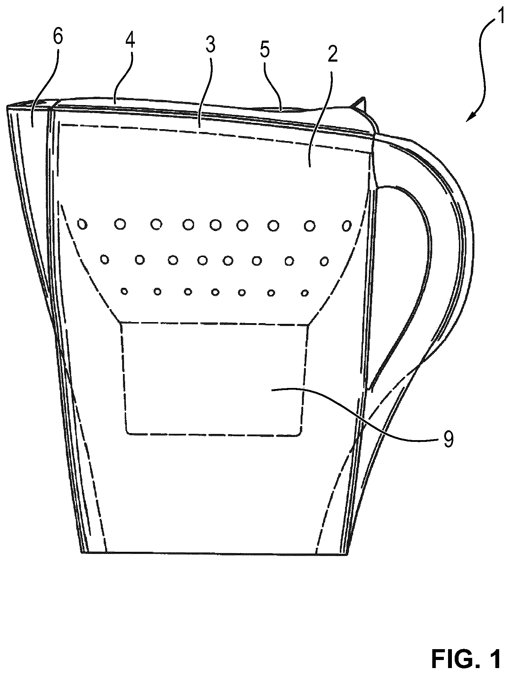

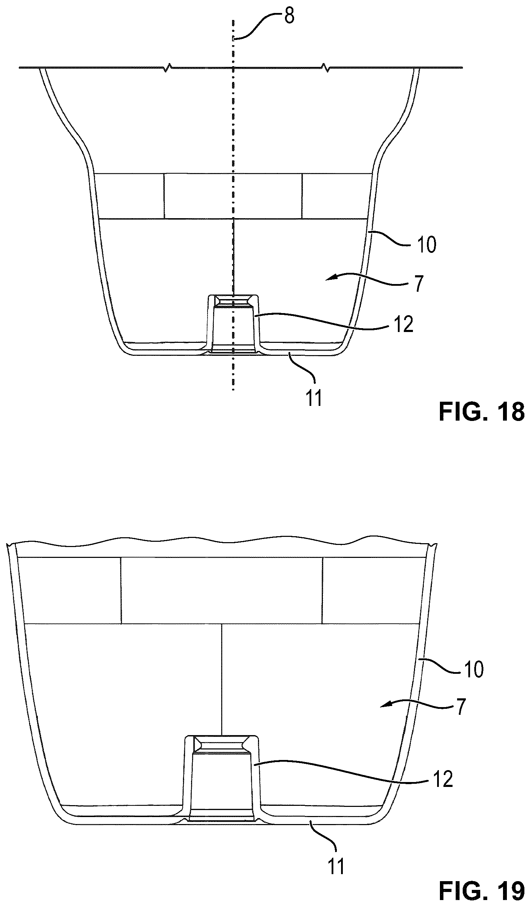

The reservoir includes a cartridge seat including a cartridge seat chamber 7 (Figs. 18-20) having an opening at one axial end. An axis 8 of reference (Fig. 18) has a generally vertical orientation in use. The cartridge seat chamber 7 is defined in an appendage 9 (Fig. 1) to a bottom wall section of the reservoir 2. The appendage 9 is an integral part of the reservoir 2. The reservoir 2 may be made of plastic and is generally obtainable by injection-moulding.

In the illustrated embodiment, the opening of the cartridge seat chamber 7 is at an in use upper axial end of the cartridge seat chamber 7. Seen from above in axial direction, the opening of the cartridge seat chamber 7 and also its cross-sectional shape at axial locations near the opening are elongated in shape. The same is true for the reservoir 2 and the jug 1. An upper section of a cartridge seat chamber side wall 10 (Figs. 18-22, 31, 37, 38) forms a sealing surface for sealingly engaging an at least partially inserted liquid treatment cartridge along its circumference.

A cartridge seat chamber bottom wall 11 is situated at an opposite axial end of the cartridge seat chamber 7 to the opening thereof. The cartridge seat chamber bottom wall 11 comprises a projecting cartridge seat part 12 that projects into the cartridge seat chamber 7 with respect to a surrounding section of the cartridge seat chamber bottom wall 11. The projecting cartridge seat part 12 and the surrounding section of the cartridge seat chamber bottom wall 11 are integral parts of a single component, in this example the reservoir 2.

The projecting cartridge seat part 12 is hollow and defines a liquid channel having an opening at one axial end through which liquid is discharged, in use. This opening forms an aperture in the cartridge seat chamber bottom wall 11, seen from the other side of the cartridge seat chamber bottom wall 11 to the cartridge seat chamber 7. In the illustrated embodiment, treated liquid is discharged through this opening into the jug 1, in use.

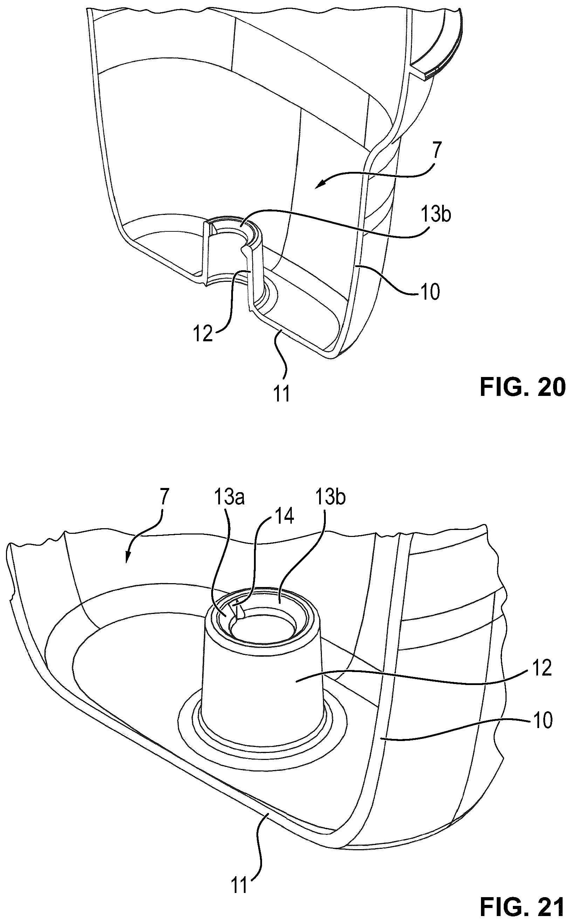

A central opening is provided at an opposite axial end of the liquid channel. Multiple ridges 13a,b (Figs. 20,21), two in the illustrated embodiment, are provided about the central opening. Ends of these ridges 13a,b are spaced apart in tangential direction to define slits 14 (Fig. 21) allowing liquid to pass between the ridges 13a,b in use. Thus, even if the central opening is blocked, liquid can still flow from the cartridge seat chamber 7 into the liquid channel defined by the projecting cartridge seat part 12. In an alternative embodiment, there is only one ridge. It is interrupted once along the circumference of the central opening, so that a single slit is defined between the ends of this ridge. An even distribution of slits 14 along the circumference of the central opening will result in a better flow pattern, however. In particular, where the cartridge seat chamber 7 has a cross-section (with the cross-sectional plane perpendicular to the reference axis 8) that is elongated in shape, it is useful to have at least two slits 14 on opposite sides of the central opening that are aligned with the major axis of the elongated shape.

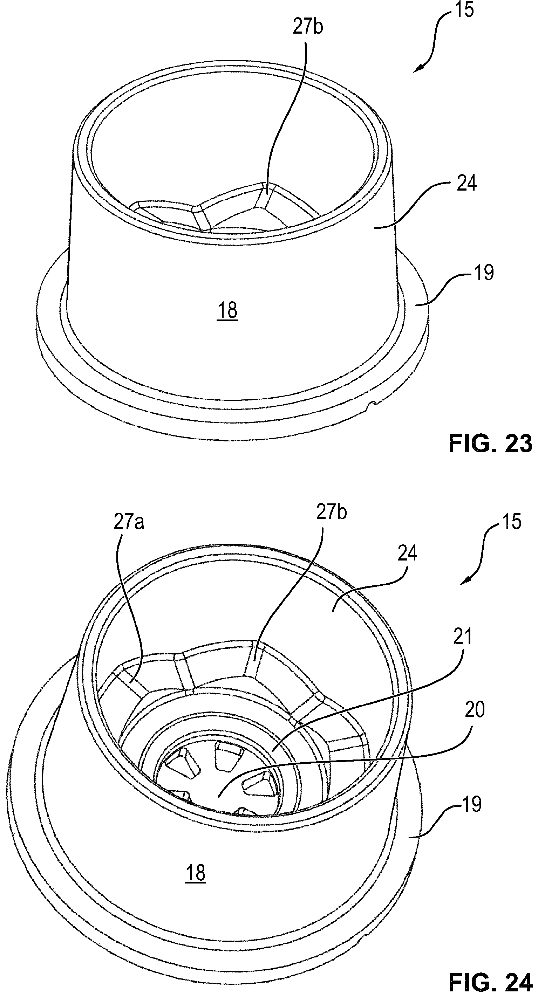

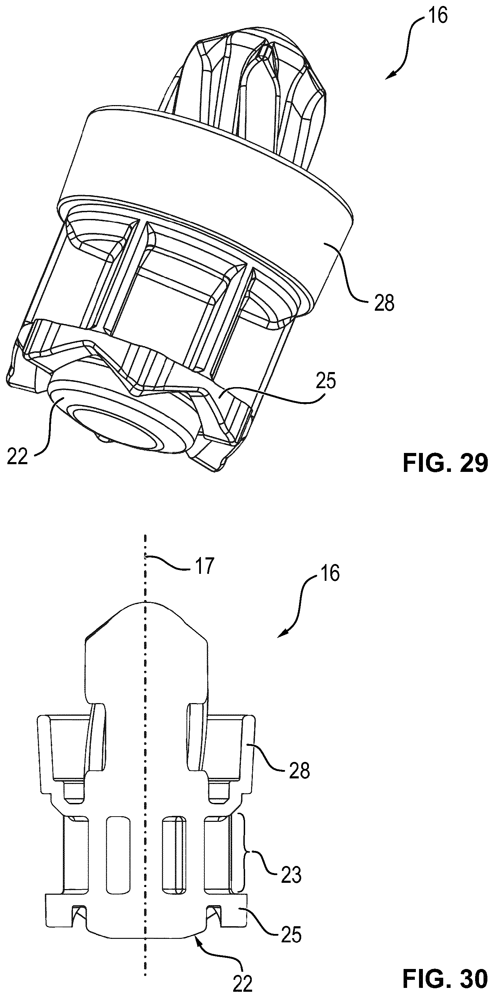

A valve including a valve body 15 (Figs. 23-25) and a movable valve component 16 is inserted into the liquid channel defined by the projecting cartridge seat part 12. The movable valve component 16 is journalled for internal rotation about a reference axis 17 (Fig. 30) and limited axial movement with respect to the valve body 15. The reference axis 17 of the movable valve component 16 has an essentially upright orientation, in use, being essentially aligned with the reference axis 8 defined for the cartridge seat chamber 7. In this example, it corresponds to a body axis of the movable valve component 16.

The valve body 15 and the movable valve component 16 are moulded parts, each being a single body made of a single material. In an embodiment, they are injection-moulded parts. They may be made of plastic, e.g. a thermoplastic material. In the example, they are made of different materials. The valve body 15 is made of the same material as the rest of the reservoir 2 to allow it to be joined thereto by welding, e.g. ultrasonic welding. An example of a suitable material is polypropylene (PP). The movable valve component 16, which in this example is devoid of closed voids, is made of a material having a density larger than that of water. This ensures that it does not float up when submerged in water. An example of a suitable material is polyoxymethylene (POM).

The valve body 15 has a radially outer lateral surface 18 that conforms in shape to the inside surface of the liquid channel defined by the projecting cartridge seat part 12. This may be a circle-cylindrical shape. The valve body 15 is joined to the projecting cartridge seat part 12 and/or the cartridge seat chamber bottom wall 11, e.g. by at least one of a friction fit and a bond, e.g. an adhesive bond. The movable valve component 16 is a loose part, but its range of axial movement is restricted by the ridges 13a,b and the valve body 15. The movable valve component 16 is thus retained by and between the valve body 15 and the ridges 13a,b protruding into the liquid channel defined by the projecting cartridge seat part 12.

A flange 19 (Figs. 23-25) limits the extent to which the valve body 15 can be inserted into the liquid channel defined in the projecting cartridge seat part 12 when it is mounted. This ensures that the range of axial movement of the movable valve component 16 is not restricted too much. Also, the flange 19 provides a contact surface for contacting the cartridge seat chamber bottom wall 11 to ensure that no liquid can leak out of the liquid channel between the valve body 15 and the inside surface of the projecting cartridge seat part 12.

The valve body 15 defines a liquid-permeable port at the axial end closest to the flange 19. A lattice 20 (Figs. 24-25) is arranged in the port. The lattice 20 is an integral part of the valve body 15 in this embodiment. It allows liquid to pass through the port but prevents the insertion of extraneous objects through the port from below. This is useful because the port is provided in the centre of a valve seat 21. In an alternative embodiment, a single cross-bar may be sufficient to fulfil this function.

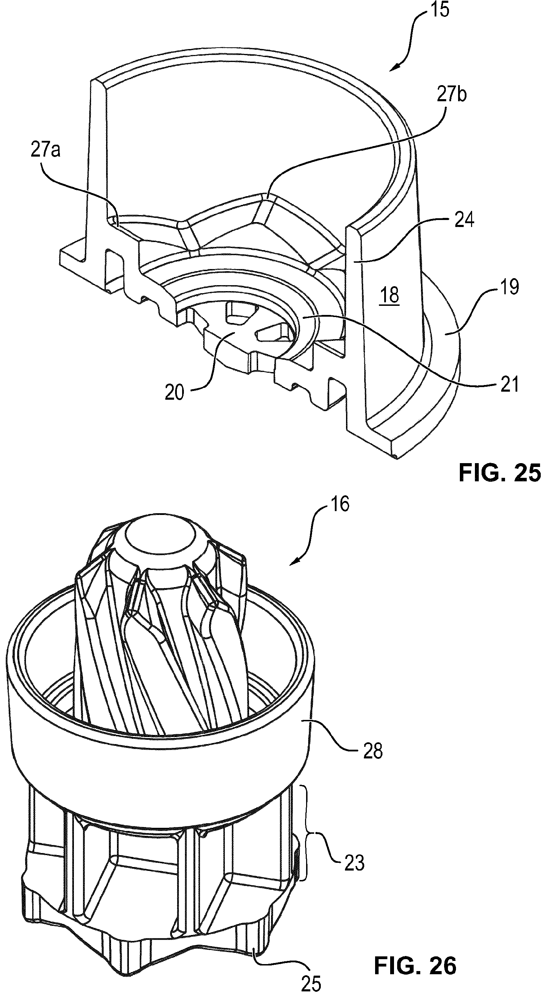

The valve seat 21 has an essentially conical shape in this embodiment. The movable valve component 16 is provided with a matching surface 22 corresponding in shape to at least a section of a lateral surface of a cone. As will be explained, the valve body 15 is moved axially into and out of engagement with the valve seat 21 to close and open the valve. The axial end of the movable valve component 16 at which the valve component sealing surface 22 is provided thus forms a regulating part of the movable valve component 16, which regulating part is arranged selectively to obstruct the flow of liquid through the port. An actuating part of the movable valve component 16 is situated at an opposite axial end. A section 23 (Figs. 26 and 30) with multiple recesses is provided in between.

A side wall 24 (Figs. 23-25) of the valve body 15, which side wall 24 in this example also provides the radially outer lateral surface 18, defines a recess in which at least an axial section of the movable valve component 16 including at least a section of the regulating part thereof is received. The recess has an essentially circular cross-section. In this example, at least a section of the recess is circle-cylindrical in shape, but it might also be slightly conical. The valve body side wall 24 supports the movable valve component 16 laterally when it and the valve body 15 are being mounted in the liquid channel defined in the projecting cartridge seat part 12. It also plays a role in centring the movable valve component 16 when it is not in the valve seat 21.

However, the movable valve component 16 does not contact the inside surface of the recess along the entire circumference of the circle. Rather, a base 25 (Figs. 26-30) has a cross-section (with the cross-sectional plane perpendicular to the reference axis 17) that lies within an imaginary circumscribed circle with suitable diameter. The outer contour of the cross-section touches the circumscribed circle at multiple points along the circumference, which points are generally uniformly distributed along the circumference. The outer contour lies radially at a distance to the circumscribed circle in between these points, so that space is provided for liquid to flow past in generally axial direction. In this way, the movable valve component 16 is still supported laterally but does not block the flow of liquid when the valve is open. In the illustrated example, the base 25 lies axially adjacent the recessed section 23, which further decreases the resistance to flow of the valve in the open configuration.

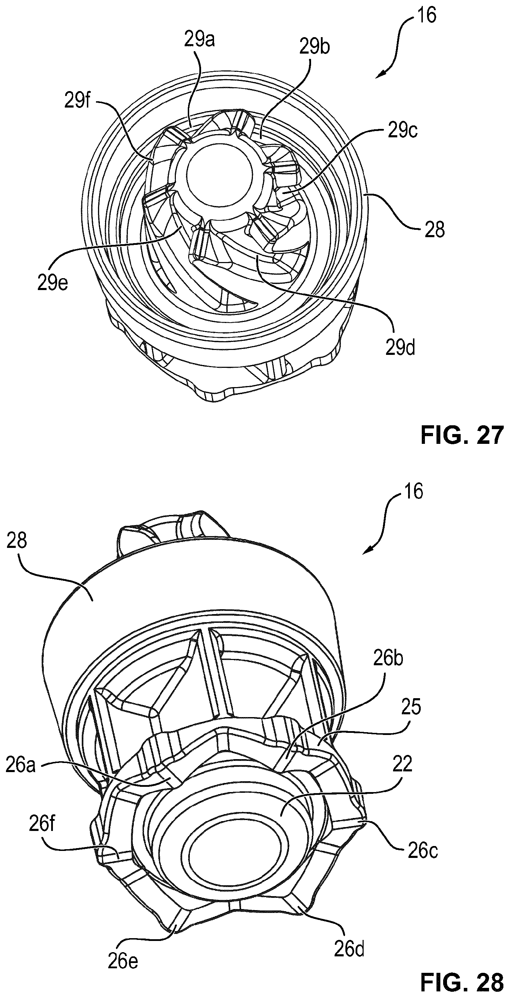

A series of crests 26a-f (Fig. 28) is defined on an axial end of the movable valve component 16 on which the movable valve component 16 is supported by the valve body 15. The crests 26a-f are all of the same shape, with their apexes at the same axial location. The crests 26a-f project in axial direction towards supporting surfaces of the valve body 15 and are defined by inclined surfaces. They are arranged along a circle centred on the axis of rotation of the movable valve component 16, i.e. the reference axis 17. The valve component sealing surface 22 is also arranged in a circle about the reference axis 17, but radially closer to it. This surface 22 is thus separate from those of the crests 26a-f. The inclined surfaces of the crests 26a-f have normals directed partly radially outwards, partly in axial direction and partly in tangential direction. They thus face partly radially outwards. In an alternative embodiment, they may face partly radially inwards. In either case, a further centring effect is achieved. Adjacent inclined surfaces of adjacent crests 26a-f face towards each other in tangential direction.

The valve body 15 has a matching series of inclined surfaces defined by a matching series of valve body crests 27a-b of similar shape and dimension to the crests 26a-f projecting from the movable valve component 16. The number of valve body crests 27a-f equals the number of crests 26a-f on the movable valve component 16. The inclined surfaces of the valve body 15 face at least partly in axial direction towards the movable valve component 16 and at least partly in tangential direction, such that adjacent inclined surfaces of adjacent valve body crests 27a-b face each other. The inclined surfaces of the valve body crests 27a-b face partly radially inwards. These inclined surfaces support the movable valve component 16, at least when the position of the movable valve component 16 allows liquid to flow through the port in the valve body 15.

At most a slight amount of vibration is sufficient to cause the crests 26a-f of the movable valve component 16 to slide down the contacting inclined surfaces of the valve body crests 27a-b when the movable valve component 16 is merely supported by the valve body 15. As a consequence, the movable valve component 16 moves in axial direction into the valve seat 21, such that the valve component sealing surface 22 contacts the valve seat 21. The movable valve component 16 assumes one of six possible rotary positions.

If the movable valve component 16 is subsequently rotated, the interaction between the crests 26a-f,27a-b causes the movable valve component to move in axial direction, such that the valve component sealing surface 22 is moved out of engagement with the valve seat 21. The valve is thus opened.

The range of axial movement of the movable valve component 16 away from the valve seat 21 is limited due to the presence of a collar 28 having a diameter sufficient to allow it to contact the ridges 13a,b projecting from the surface of the liquid channel defined by the projecting cartridge seat part 12. Although the collar 28 in this example has an essentially circle-cylindrical shape, it may be interrupted along its circumference in other embodiments. It may also have a different shape, e.g. a star-shaped cross-section, as long as its axial end that is free is at one single axial location to prevent tilting of the movable valve component 16 if the reservoir 2 is turned upside down. This is to ensure that the movable valve component 16 does not become jammed when the reservoir 2 is turned upside down, e.g. to place it in a dishwasher.

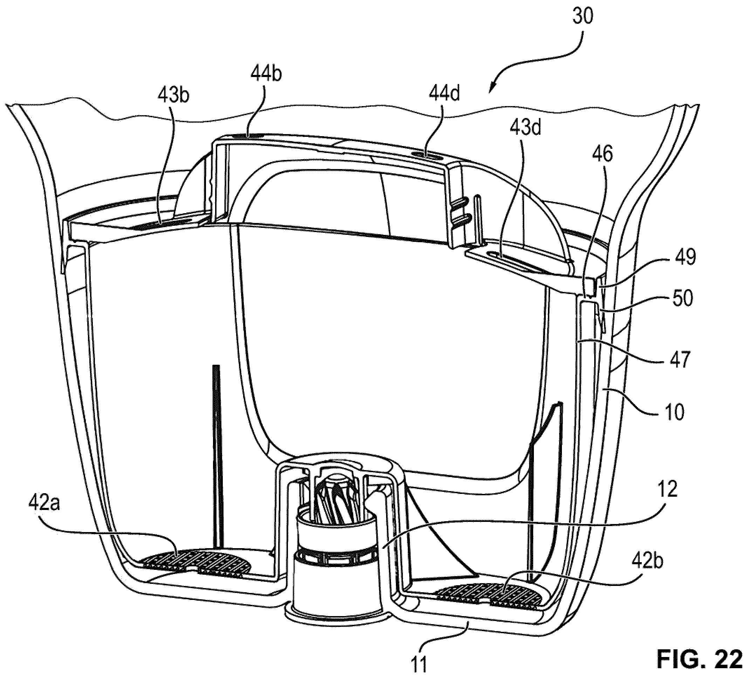

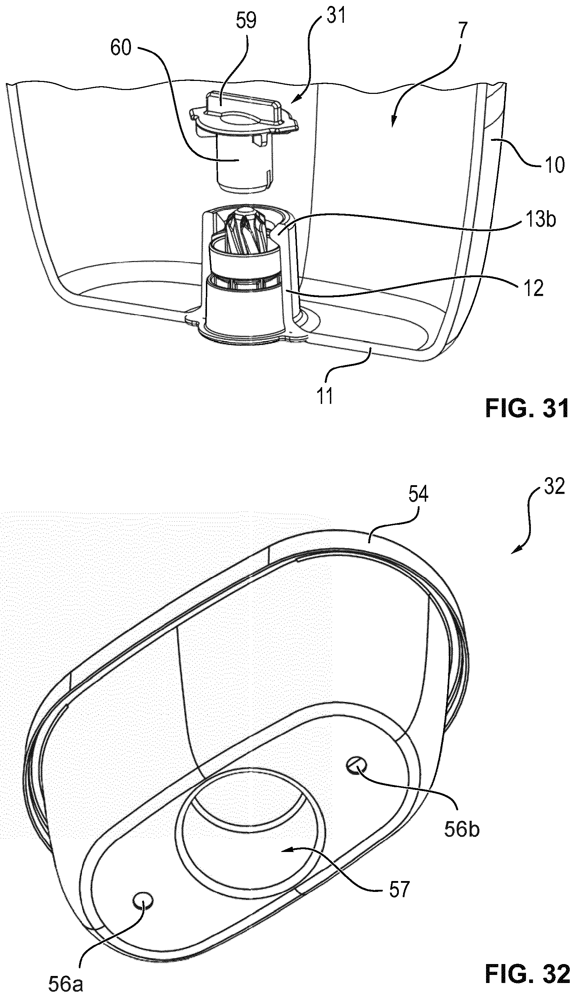

The collar 28 surrounds an actuating part having a smaller width and centred on the reference axis 17, i.e. the axis of rotation. The actuating part is basically a column with a series of helical grooves 29a-f (Fig. 27) in it, which are each open at an end closest to the free axial end of the column to allow a follower or other engagement element of a valve actuating device to enter the groove 29a-f. The helical grooves 29a-f widen towards the axially open end to facilitate entry of such an engagement element. Moreover, the number of helical grooves 29a-f equals the number of crests 26a-f at the opposite axial end the movable valve component 16, and thus the number of valve body crests 27a-b. Like the crests 26a-f, the helical grooves 29a-f are distributed uniformly about the reference axis 17. Thus, with the valve closed, the openings at the axial ends of the helical grooves 29a-f are always at essentially the same positions. The engagement part protrudes through the central opening surrounded by the ridges 13a-b (cf. Figs. 22 and 31).

The actuating part of the movable valve component 16 can be engaged by a valve actuating device to open and close the valve. In a first embodiment, the valve actuating device is comprised in a first liquid treatment cartridge 30, more in particular its housing. In a second embodiment, the valve actuating device is comprised in an adapter 31 provided in a kit of parts further including a separate second liquid treatment cartridge 32. The first embodiment will be used first to describe the interaction between the actuating part of the movable valve component 16 and the actuating device.

The actuating part of the movable valve component 16 is comprised in a screw drive mechanism for converting linear, essentially axial, motion of the valve actuating device into internal rotation of the movable valve component 16 about the axis 17. It will be recalled that this rotary motion is then converted into axial motion in the opposite direction to that of the valve actuating device to lift the movable valve component 16 out of contact with the valve seat 21, when starting from the closed configuration.

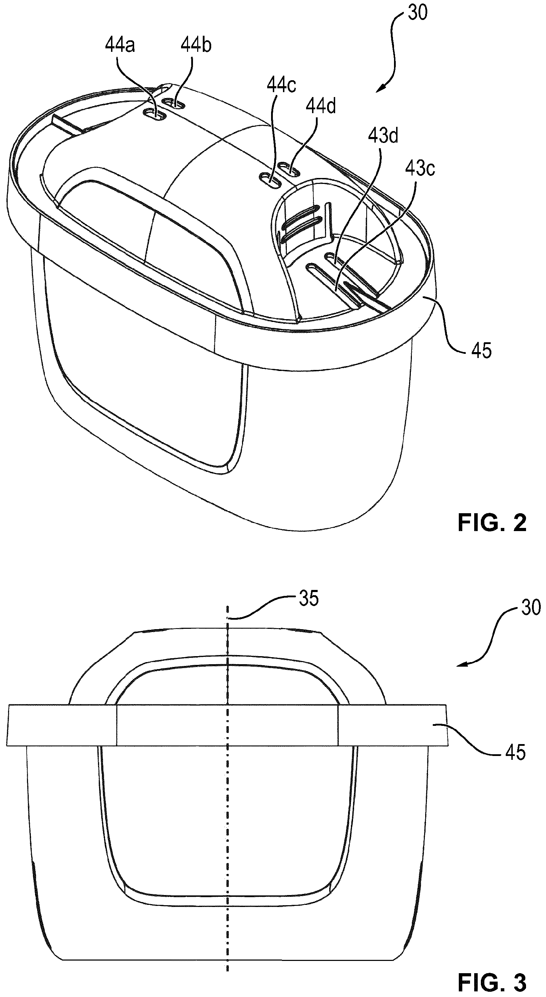

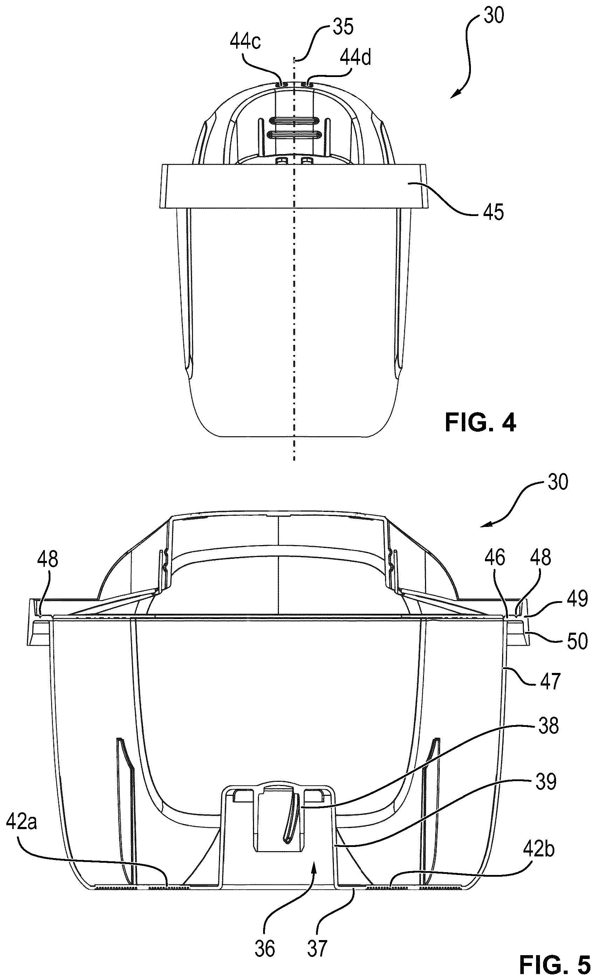

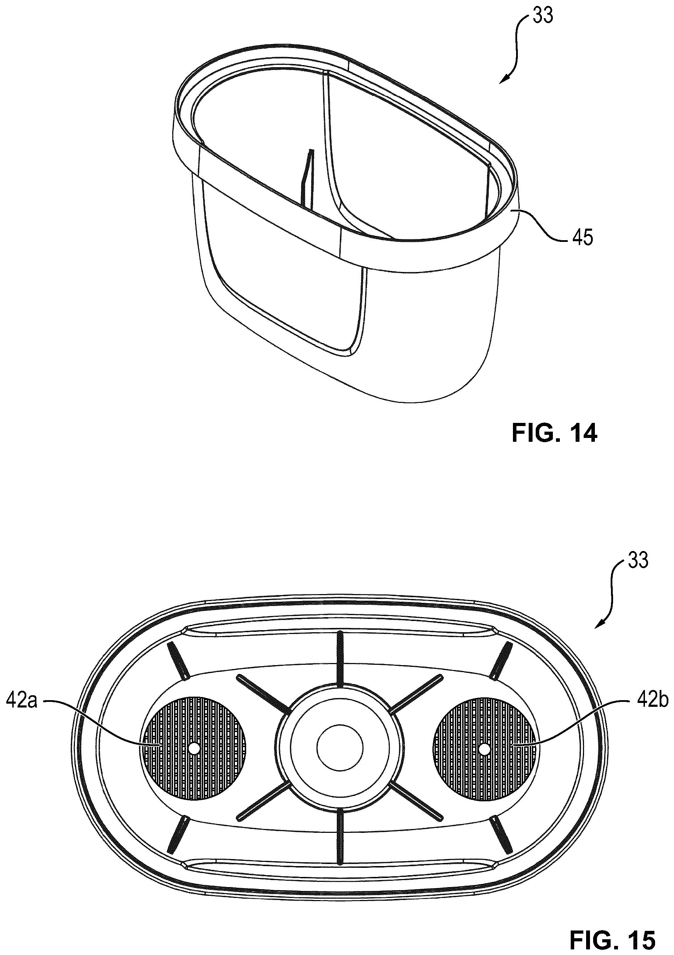

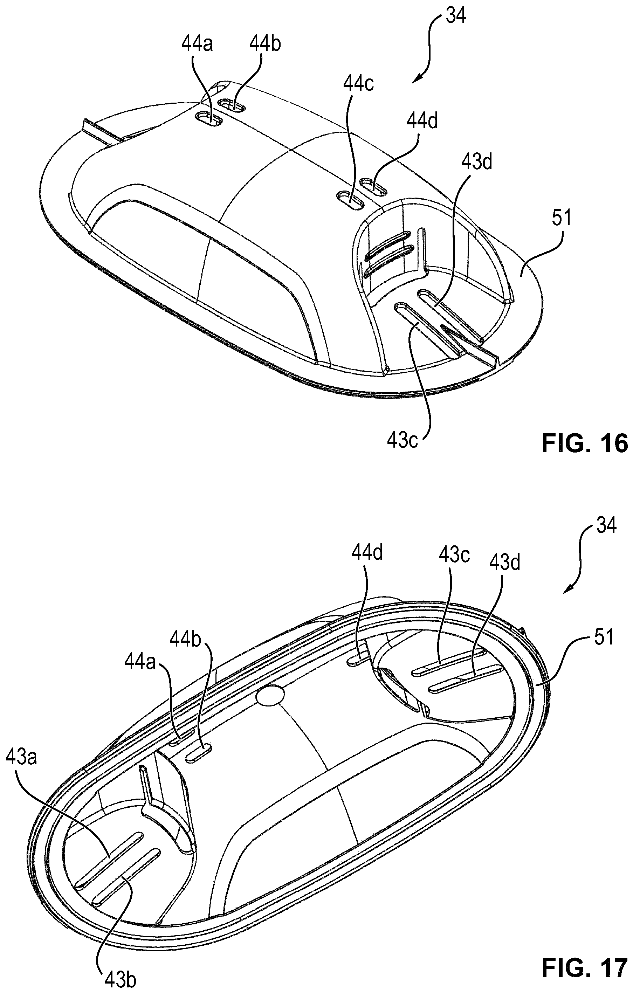

The first liquid treatment cartridge 30 includes a cartridge housing including a vessel-shaped part 33 (Figs. 14,15) closed by a cap-shaped part 34 (Figs. 16,17) at an open end thereof. A cartridge reference axis 35 (Figs. 3,4) may be defined, corresponding to an upright axis of the cartridge housing. The cartridge reference axis 35 is essentially aligned with the reference axis 8 of the cartridge seat, and thus the reference axis 17 of the movable valve component 16 when the first liquid treatment cartridge 30 is inserted into the cartridge seat.

The vessel-shaped part 33 forms the axial end of the cartridge housing that is inserted into the cartridge seat chamber 7. It has a recess 36 defined in an axial end wall referred to here as a cartridge bottom wall 37. An opening of the cartridge recess 36 forms an aperture in a surrounding section of the cartridge bottom wall 37. A hollow projecting part 38 is at least partly, in this case completely, arranged in the cartridge recess 36. In the illustrated example, the hollow projecting part 38 projects from a wall section at an axial end of the cartridge recess 36 opposite and facing the opening of the cartridge recess 36.

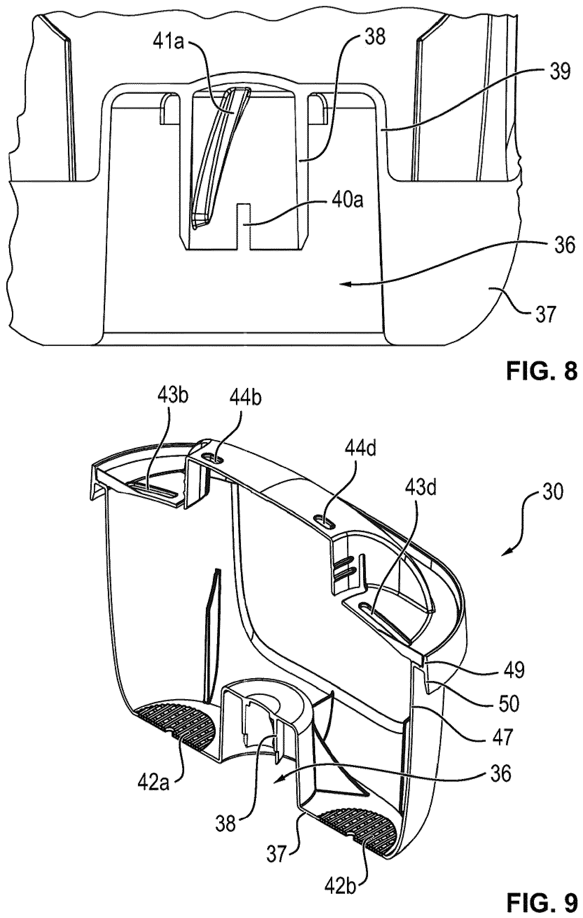

The hollow projecting part 38 is arranged to receive the actuating part of the movable valve component 16, including in particular the section provided with the helical grooves 29a-f, when the first liquid treatment cartridge 30 is inserted sufficiently far into the cartridge seat. It follows that the hollow projecting part 38 has an outer diameter enabling it to be inserted into the central opening at the end of the liquid passage defined by the projecting cartridge seat part 12. Furthermore, there is a sufficient distance between the radially outer surface of the hollow projecting part 38 and a recess side wall 39 (Figs. 5-8) of the cartridge recess 36 to enable at least an axial end section of the projecting cartridge seat part 12 to be received in the cartridge recess 36. When this axial end section is received in the cartridge recess 36 the recess side wall 39 is still spaced apart from the inserted part of the projecting cartridge seat part 12. Furthermore, a free axial end of the projecting cartridge seat part 12 is spaced apart from the axial end wall of the cartridge recess 36. This spacing allows liquid to flow into the recess between the inserted part of the projecting cartridge seat part 12 and the recess side wall 39. From there it can flow into the projecting cartridge seat part 12 through at least the slits 14a,b.

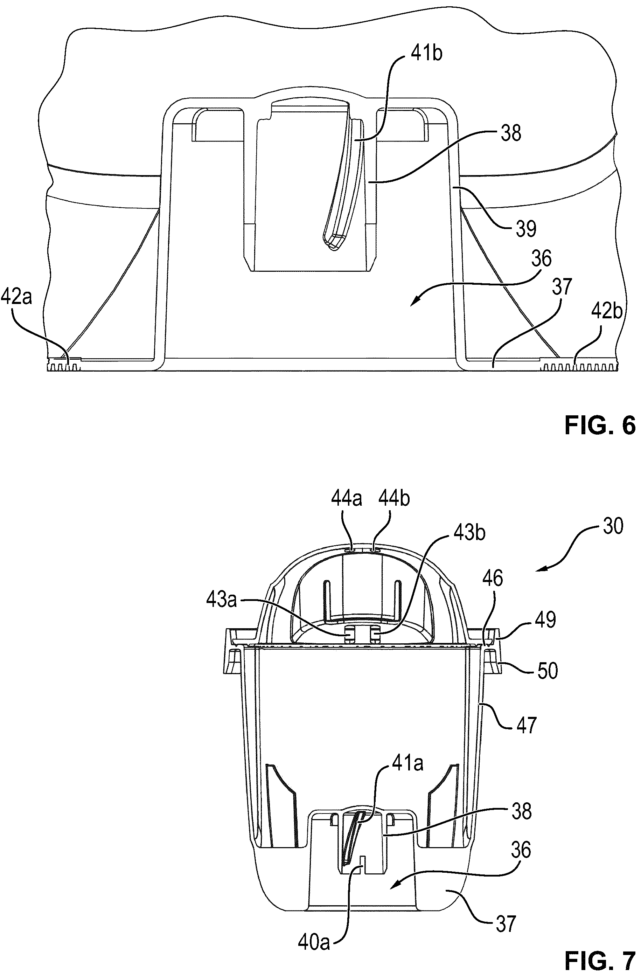

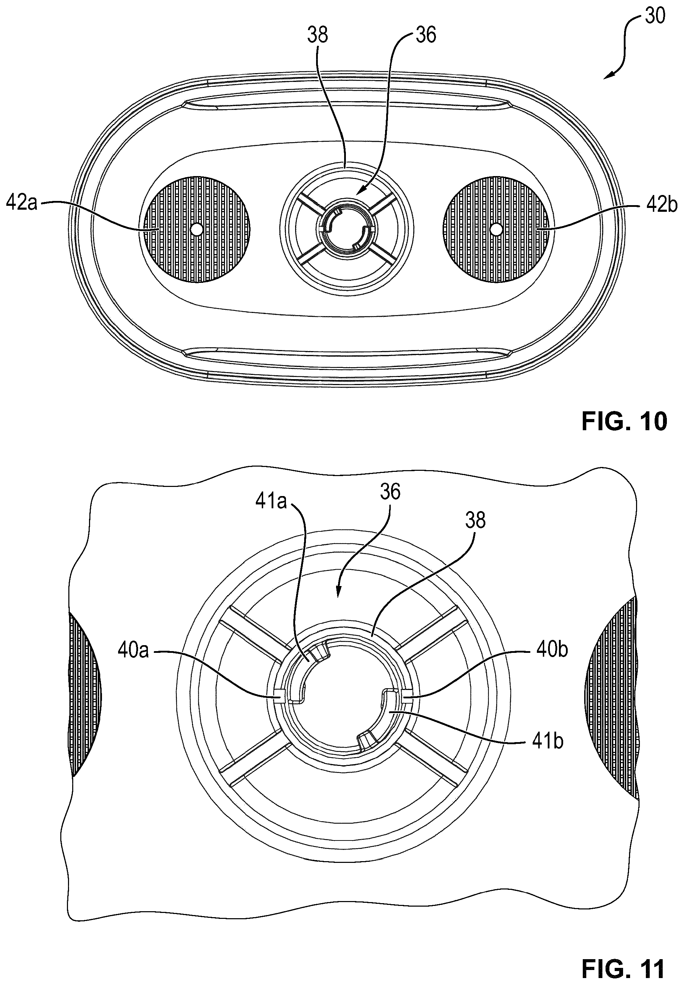

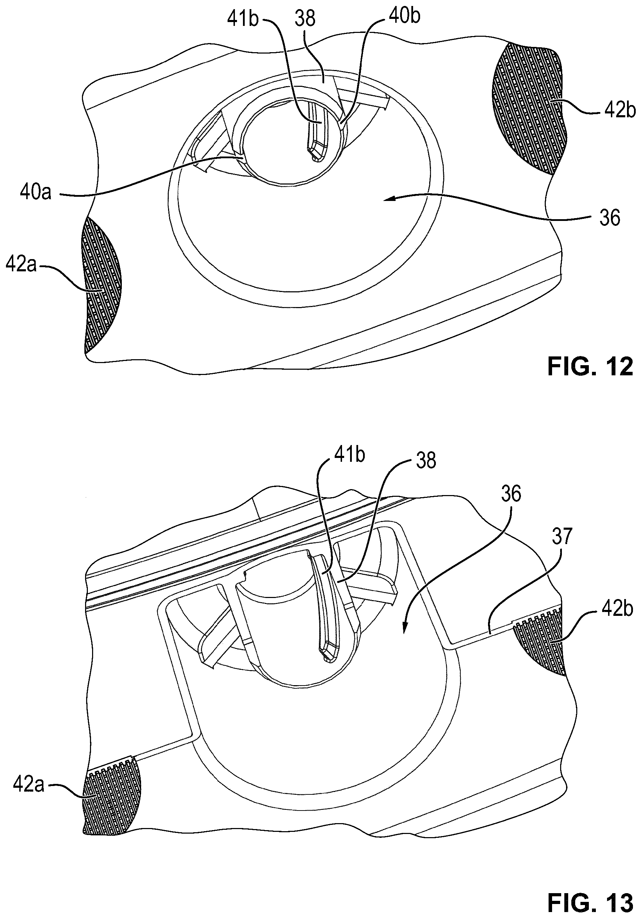

The hollow projecting part 38 may have an outer surface that is essentially circle-cylindrical, as shown. In an alternative embodiment, one or more bulges are provided on the outer surface, which latch behind the ridges 13a,b to hold the first liquid treatment cartridge 30 in an operative axial position in the cartridge seat. Alternatively, a friction fit may be provided between the outer surface of the hollow projecting part 38 and the radially inside edge of the ridges 13a,b. To this end, the hollow projecting part 38 can be compressed in radial direction through engagement with the ridges 13a,b. To facilitate this compression, interruptions 40a,b (Figs. 7,8,11,12) in the wall of the hollow projecting part 38 extend over at least part of the axial extent of the latter to an edge at its free axial end. As a consequence, the area of the slits 14a,b determines the rate of flow through the cartridge seat when the valve is open. Furthermore, the first liquid treatment cartridge 30 is correctly aligned with the cartridge seat. A skewed position of the first liquid treatment cartridge 30 is essentially avoided.

The parts of the screw drive mechanism with which the first liquid treatment cartridge is provided include protruding screw thread sections 41a,b that are provided on an interior surface of the hollow projecting part 38. Each is shaped and dimensioned to engage one of the helical grooves 29a,b such as to contact at least one of the helical side walls of the groove 29a-f. Each such helical side wall forms a helical contour. A screw thread section 41a,b inserted into a groove 29 engages at least one of the contours as the valve is opened and at least the opposite one as it is closed. There will generally be some play, so that the screw thread section 41a,b will engage only one of the two contours at a time.

There are fewer screw thread sections 41a,b than there are helical grooves 29a-f in this embodiment. Thus, in each direction (insertion and removal of the first liquid treatment cartridge) there are two pairs of a helical contour and a part for engaging the helical contour.

It is noted that the tangential spacing between adjacent parts for engaging the helical contour is a multiple of the tangential spacing between adjacent helical grooves 29a-f. To further facilitate insertion, the screw thread sections 41a,b taper towards the end closest to the free axial end of the hollow projecting part 38.

It is further noted that the screw thread sections 41a,b need not extend all the way to the free axial end of the hollow projecting part 38. They need not extend over a complete turn about the axis 35 either. In an alternative embodiment, the helix angle varies in axial direction, e.g. continuously, so that the grooves 29a-f are merely spiral, as opposed to being helical.

Before discussing the alternative valve actuating device in the form of the adapter 31, the remainder of the first liquid treatment cartridge 30 will be described.

A treatment chamber is defined by the vessel-shaped part 33. In the illustrated embodiment, it is closed off at the top by the cap-shaped part 34. A liquid-permeable mesh (not shown) may be provided on the inside of the cap-shaped part 34 in one embodiment.

The treatment chamber is arranged to hold one or more liquid treatment media for treating liquids such as aqueous liquids. An example would be mains drinking water. The liquid treatment media include liquid treatment media for the treatment of liquid in a diffusive process, e.g. media removing or adding components to the liquid. In particular, the media may include a liquid treatment medium for the treatment of liquid by sorption, which for present purposes includes ion exchange, adsorption and absorption. The media may include activated carbon. They may include an ion exchange resin, e.g. a cation exchange resin. The cation exchange resin may include cation exchange resin in the hydrogen form. In a particular embodiment, a majority of the ion exchange resin is in the hydrogen form. For more effective use of the available volume, the cation exchange resin may be weakly acidic cation exchange resin. The liquid treatment medium will generally be at least partly in granular form.

The vessel-shaped part 33 is provided with two liquid-permeable windows 42a,b forming liquid outlets in fluid communication with treatment chamber. The liquid-permeable windows 42a,b are each provided with a lattice for retaining granular liquid treatment media. Any similar mechanical filtration part may be employed instead.

The cap-shaped part 34 (Figs. 16,17) is provided with liquid-permeable windows 43a-d forming liquid inlets and with venting apertures 44a-d. The cap-shaped part 34 has a central dome-shaped section, with the venting apertures 44a-d provided at the apex thereof. The liquid-permeable windows 43a-d are provided at an axial location nearer the liquid-permeable windows 42a,b forming liquid outlets than the venting apertures 44a-d. Thus, gas bubbles are less likely to block the liquid-permeable windows 43a-d forming the liquid inlets when the first liquid treatment cartridge is submerged in the liquid to be treated poured into the reservoir 2.

The vessel-shaped part 33 includes a sealing rim 45 at an opposite axial end to the cartridge bottom wall 37. It extends about the circumference of the vessel-shaped part 33 and is closed on itself around the cartridge reference axis 35. The sealing rim 45 separates the liquid-permeable windows 43a-d forming liquid inlets from the liquid-permeable windows 42a,b forming the liquid outlets.

The sealing rim 45 includes a radially inner section 46 (Figs. 5,7) projecting at least partly in radial direction with respect to a side wall 47 of the vessel-shaped part 33 along the circumference of the latter. A score 48 divides a radially outer section from the radially inner rim section 46. The sealing rim 45 can thus flex relatively easily. The radially outer section includes a section forming an upstanding ridge 49 and a depending section 50, both at an angle to the radially inner section 46 and presenting an at least partly radially outward-facing surface.

The upstanding ridge 49 surrounds the liquid-permeable windows 43a-d forming the liquid inlets, of which at least a section is located at an axial position closer to the liquid-permeable windows 42a,b forming liquid outlets than is the edge of the upstanding ridge 49. Thus, the reservoir can be completely emptied of liquid to be treated.

The radially outward-facing surface presented by the upstanding ridge 49 and the depending rim section 50 is configured to engage the cartridge seat chamber side wall 10, so that the mouth of the cartridge seat is sealed off and the first liquid treatment cartridge 30 is held in the cartridge seat. Thus, it is not necessary to rely only on engagement of the hollow projecting part 38 with the liquid channel ridges 13a,b for holding the first liquid treatment cartridge 30.

The cap-shaped part 34 is provided with a flange 51 along its circumference. This flange 51 can be placed on top and against the radially inner rim section 46 to bond the cap-shaped part 34 to the vessel-shaped part 33 after the latter has been filled with the liquid treatment media. The flange 51 need not be joined radially beyond the score 48 if it is desired to allow the sealing rim 45 to flex more, in use.

Instead of using the first liquid treatment cartridge 30, it is possible to use a kit of parts comprising the second liquid treatment cartridge 32 and the adapter 31.

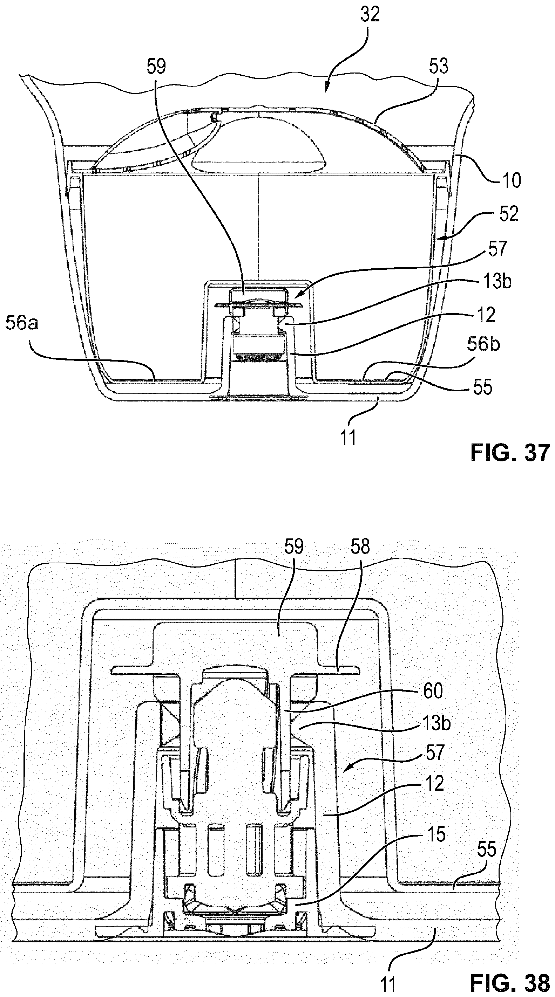

The second liquid treatment cartridge 32 is exactly as the first liquid treatment cartridge 30, except that it does not include the part forming the valve actuating device. Thus, the second liquid treatment cartridge includes a vessel-shaped part 52 and a cap-shaped part 53 (Fig. 37). The cap-shaped part 53 is identical to the cap-shaped part 34 of the first liquid treatment cartridge 30.

The vessel-shaped part 52 has a sealing rim 54 (Fig. 32) that is identical to the sealing rim 45 of the first liquid treatment cartridge 30. It also has an axial end wall forming a cartridge bottom wall 55 (Figs. 37,38), in which liquid-permeable windows 56a,b (Figs. 32,37) forming liquid outlet windows are provided. These are provided adjacent a cartridge recess 57 (Figs. 32,37,38) in the cartridge bottom wall 55. Unlike the cartridge recess 36 of the first liquid treatment cartridge 30, the cartridge recess 57 of the second liquid treatment cartridge 32 has no hollow projecting part arranged in it. The cartridge recess 57 is, however, sufficiently wide and deep to receive the projecting cartridge seat part 12 with the adapter 31 in place, in this example inserted into the central opening of the liquid channel defined in the projecting cartridge seat part 12.

In the absence of the hollow projecting part 38, the second liquid treatment cartridge 32 is held in place axially only through the interaction of the sealing rim 54 with the cartridge seat chamber side wall 10.

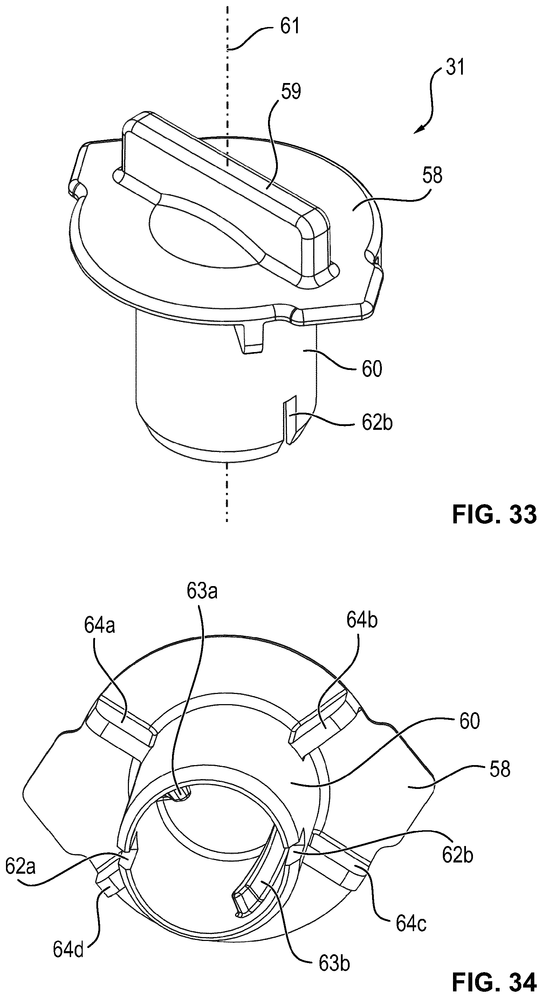

The adapter 31 is a single moulded body, e.g. a plastic body obtainable by injection-moulding. It has a base part 58 (Figs. 33-35). A handle 59 projects from one side of the base part 58. A hollow part 60 projects from the other side of the base part. One may consider the adapter 31 to have an adapter reference axis 61 (Fig. 33) that is aligned with the reference axis 17 associated with the movable valve component 16 when the adapter 31 actuates the valve.

The hollow projecting part 60 is arranged to receive the actuating part of the movable valve component 16, including in particular the section provided with the helical grooves 29a-f, when inserted sufficiently far into the liquid channel defined in the projecting cartridge seat part 12. It follows that the hollow projecting part 60 has an outer diameter enabling it to be inserted into the central opening at the end of the liquid passage defined by the projecting cartridge seat part 12.

The hollow projecting part 60 may have an outer surface that is essentially circle-cylindrical, as shown. In an alternative embodiment, one or more bulges are provided on the outer surface, which latch behind the ridges 13a,b to hold the adapter 31 in an operative axial position in the cartridge seat. Alternatively, a friction fit may be provided between the outer surface of the hollow projecting part 60 and the radially inside edge of the ridges 13a,b. To this end, the hollow projecting part 60 can be compressed in radial direction through engagement with the ridges 13a,b. To facilitate this compression, interruptions 62a,b in the wall of the hollow projecting part 38 extend over at least part of the axial extent of the latter to an edge at its free axial end.

Protruding screw thread sections 63a,b are provided on an interior surface of the hollow projecting part 60. Each is shaped and dimensioned to engage one of the helical grooves 29a,b such as to contact at least one of the helical side walls of the groove 29a-f. Each such helical side wall forms a helical contour. A screw thread section 63a,b inserted into a groove 29 engages at least one of the contours as the valve is opened and at least the opposite one as it is closed. There will generally be some play, so that the screw thread section 63a,b will engage only one of the two contours at a time.

There are fewer screw thread sections 63a,b than there are helical grooves 29a-f, namely two in this embodiment. The tangential spacing between adjacent parts for engaging the helical contour is a multiple of the tangential spacing between adjacent helical grooves 29a-f. To further facilitate insertion, the screw thread sections 63a,b taper towards the end closest to the free axial end of the hollow projecting part 60.

The screw thread sections 63a,b do not extend all the way to the free axial end of the hollow projecting part 60, nor do they extend over a complete turn about the adapter reference axis 61.

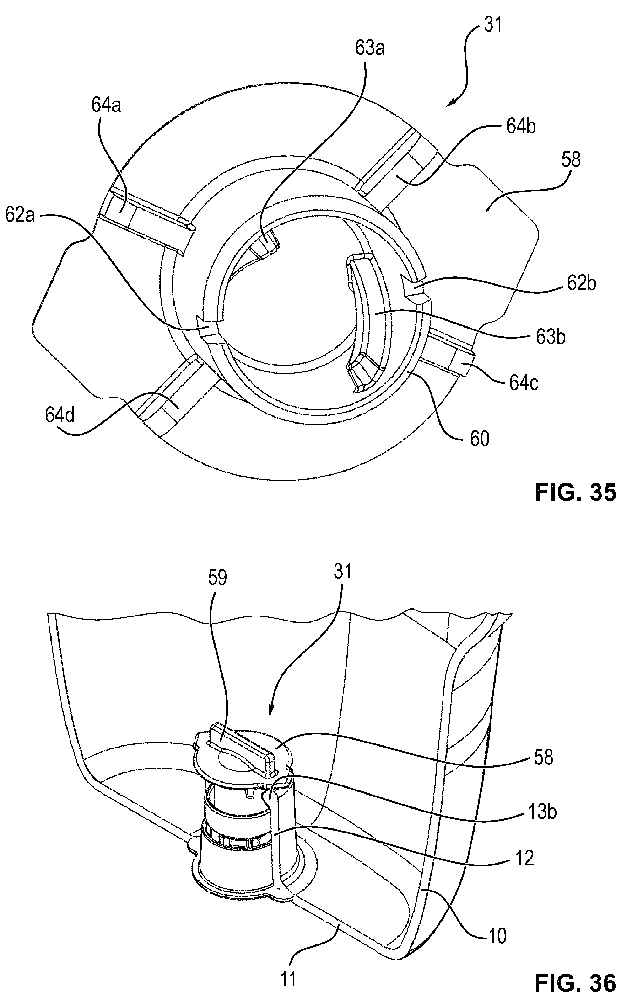

Spacers in the form of radially extending ribs 64a-d (Figs. 34,35) extend radially across the adapter base part 58 over a distance sufficient to prevent their insertion into the liquid channel defined in the projecting cartridge seat part 12. The radially extending ribs 64a-d function as stops when hollow projecting part 60 is inserted into the liquid channel, so that space is provided between the adapter base part 58 and the projecting cartridge seat part 12 for liquid to enter.

In use, the adapter 31 is first mounted by inserting the hollow projecting part 60 into the liquid channel in the projecting cartridge seat part 12. This opens the valve, in that the axial motion of the adapter 31 is converted into rotary motion of the movable valve component 16, which in turn results in its being lifted out of contact with the valve seat 21. The friction fit between the adapter 31 and the ridges 13a,b prevents axial movement of the adapter 31 in the opposite axial direction in the absence of sufficient pulling force exerted on the handle 59. Then, the second liquid treatment cartridge 32 is inserted into the cartridge seat chamber 7 such that it is closed off through the interaction between the cartridge sealing rim 45 and the cartridge seat chamber side wall 10. The projecting cartridge seat part 12 is received in the cartridge recess 57. Liquid poured into the reservoir 2 flows through the chamber in the liquid treatment cartridge 32 and is treated in the process. It exits through the liquid-permeable windows 42a,b, then enters the cartridge recess 57 between it and the projecting cartridge seat part 12. It flows through the slits 14 between the ends of the liquid channel ridges 13a,b, past the collar 28 of the movable valve component 16, the recessed section 23 and the movable valve component base 25 and then out through the port in the valve seat 21. Because the radial dimensions of the valve are relatively small, the volume of the cartridge recess 57 can be kept small. The chamber in the second liquid treatment cartridge 32 can thus have a relatively large volume. The valve component sealing surface 22 is completely lifted out of contact with the valve seat 21 without any part of the reference axis 17 about which it is arranged to rotate moving sideways.

The invention is not limited by the embodiments described above, which can be varied within the scope of the accompanying claims.

Instead of using helical screw thread sections 41a,b, projecting lugs with a rounded contour may be used to engage the surfaces defining the helical grooves 29a-f, for example.

The reservoir provided with the cartridge seat need not be a reservoir configured to be suspended in a vessel for collecting treated liquid. It may, for example, be a water tank of an appliance such as a coffee machine (e.g. a drip coffee maker), a steam iron or a liquid dispenser, e.g. a liquid dispenser integrated into a refrigerator.

### List of reference numerals

- 1 -: jug
- 2 -: reservoir
- 3 -: ridge on reservoir
- 4 -: lid
- 5 -: closure element
- 6 -: pouring spout
- 7 -: cartridge seat chamber
- 8 -: reference axis
- 9 -: appendage
- 10 -: cartridge seat chamber side wall
- 11 -: cartridge seat chamber bottom wall
- 12 -: projecting cartridge seat part
- 13a,b -: ridges
- 14 -: slit
- 15 -: valve body
- 16 -: movable valve component
- 17 -: reference axis of movable valve component
- 18 -: outer surface of valve body
- 19 -: valve body flange
- 20 -: lattice
- 21 -: valve seat
- 22 -: valve component sealing surface
- 23 -: recessed section of valve component
- 24 -: valve body side wall
- 25 -: base of movable valve component
- 26a-f -: crests
- 27a-b -: valve body crests
- 28 -: collar
- 29a-f -: helical grooves
- 30 -: first liquid treatment cartridge
- 31 -: adapter
- 32 -: second liquid treatment cartridge
- 33 -: vessel-shaped part
- 34 -: cap-shaped part
- 35 -: cartridge reference axis
- 36 -: cartridge recess
- 37 -: cartridge bottom wall
- 38 -: hollow projecting part
- 39 -: recess side wall
- 40a,b -: interruptions
- 41a,b -: screw thread sections
- 42a,b -: liquid-permeable windows forming liquid outlets
- 43a-d -: liquid-permeable windows forming liquid inlets
- 44a-d -: venting apertures
- 45 -: sealing rim
- 46 -: radially inner rim section
- 47 -: cartridge side wall
- 48 -: score
- 49 -: upstanding ridge
- 50 -: depending rim section
- 51 -: flange on cap-shaped part
- 52 -: vessel-shaped part
- 53 -: cap-shaped part
- 54 -: sealing rim
- 55 -: cartridge bottom wall
- 56 -: liquid-permeable windows
- 57 -: cartridge recess
- 58 -: base part of adapter
- 59 -: handle
- 60 -: hollow projecting part
- 61 -: adapter reference axis
- 62a,b -: interruptions
- 63a,b -: screw thread sections
- 64a-d -: radially extending ribs

## Claims

1. Valve for regulating a flow of liquid through a channel in a wall of a cartridge seat of a liquid treatment system, the valve including at least:
a valve body (15) defining at least one port; and
at least one movable valve component (16), movable with respect to the valve body (15),
the at least one movable valve component (16) including a regulating part for selectively obstructing a flow of liquid through the at least one port and an actuating part for engaging a valve actuating device when the valve actuating device is inserted into the cartridge seat,
the regulating part being movable with respect to the valve body (15) to block the port to a degree depending on its position, **characterised in that**
the actuating part includes a member of each of at least one pair of a spiral contour and a part for engaging the spiral contour and is comprised in a mechanism for converting linear motion in axial direction of a valve actuating device into rotary motion of the at least one movable valve component (16) about the axis or a parallel axis, and **in that**
a section of the valve actuating device included in the mechanism includes the other members of the at least one pair and is insertable in axial direction through an opening of the valve for admitting liquid to the valve,
the mechanism including the parts for engaging a spiral contour and including the spiral contours.

2. Valve according to claim 1,
wherein the spiral contours are defined by spiral grooves (29a-f) for receiving the parts (41a,b;63a,b) for engaging the spiral contour.

3. Valve according to claim 1 or 2,
wherein the valve body (15) defines a valve seat (21) for receiving the regulating part in which valve seat (21) the port is provided.

4. Reservoir for a liquid treatment system, including:
a cartridge seat, the cartridge seat including:
a valve according to any one of the preceding claims;
a chamber (7) having an opening at an axial end through which a liquid treatment cartridge (30;32) is at least partially insertable in axial direction with respect to a reference axis corresponding to or parallel to the axis of rotation of the at least one movable valve component;
a sealing surface for sealingly engaging an at least partially inserted liquid treatment cartridge (30;32) along its circumference; and
a liquid channel through a wall (11) of the chamber (7),
wherein the valve is arranged to regulate a flow of liquid through the liquid channel.

5. Reservoir according to claim 4,
wherein at least a section of the liquid channel is defined by a cartridge seat part (12) projecting with respect to at least a section of the chamber wall,
wherein the valve body (15) is inserted into the liquid channel, and
wherein the at least one movable valve component (16) is retained by and between the valve body (15) and at least one section (13a,b) of the cartridge seat part (12), which at least one section (13a,b) protrudes into the liquid channel.

## Patentansprüche

1. Ventil zum Regeln eines Flüssigkeitsstroms durch einen Kanal in einer Wand eines Kartuschensitzes eines Flüssigkeitsbehandlungssystems, wobei das Ventil mindestens beinhaltet:
einen Ventilkörper (15), der mindestens einen Anschluss definiert; und
mindestens eine bewegliche Ventilkomponente (16), die in Bezug auf den Ventilkörper (15) beweglich ist,
wobei die mindestens eine bewegliche Ventilkomponente (16) einen Regelteil zum selektiven Sperren eines Flüssigkeitsstroms durch den mindestens einen Anschluss und einen Betätigungsteil zum Eingreifen in eine Ventilbetätigungsvorrichtung, wenn die Ventilbetätigungsvorrichtung in den Kartuschensitz eingesetzt wird, beinhaltet,
wobei der Regelteil in Bezug auf den Ventilkörper (15) beweglich ist, um den Anschluss zu einem Grad zu blockieren, der von seiner Position abhängig ist, **dadurch gekennzeichnet, dass**
der Betätigungsteil ein Element von jedem mindestens eines Paares einer Spiralkontur und eines Teils zum Eingreifen in die Spiralkontur beinhaltet und in einem Mechanismus zum Umwandeln von linearer Bewegung in Axialrichtung einer Ventilbetätigungsvorrichtung in Drehbewegung der mindestens einen beweglichen Ventilkomponente (16) um die Achse oder eine parallele Achse herum umfasst ist, und dass
ein Teilstück der Ventilbetätigungsvorrichtung, das in dem Mechanismus beinhaltet ist, die anderen Elemente des mindestens einen Paars beinhaltet und in Axialrichtung durch eine Öffnung des Ventils eingesetzt werden kann, um Flüssigkeit in das Ventil einzulassen,
wobei der Mechanismus die Teile zum Eingreifen in eine Spiralkontur beinhaltet und die Spiralkonturen beinhaltet.

2. Ventil nach Anspruch 1,
wobei die Spiralkonturen durch Spiralnuten (29a-f) zum Aufnehmen der Teile (41a,b; 63a,b) zum Eingreifen in die Spiralkontur definiert sind.

3. Ventil nach Anspruch 1 oder 2,
wobei der Ventilkörper (15) einen Ventilsitz (21) zum Aufnehmen des Regelteils definiert, wobei im Ventilsitz (21) der Anschluss vorgesehen ist.

4. Behälter für ein Flüssigkeitsbehandlungssystem, welcher beinhaltet:
einen Kartuschensitz, wobei der Kartuschensitz beinhaltet:
ein Ventil nach einem der vorstehenden Ansprüche;
eine Kammer (7), die an einem axialen Ende eine Öffnung aufweist, durch die eine Flüssigkeitsbehandlungskartusche (30; 32) mindestens teilweise in Axialrichtung in Bezug auf eine Referenzachse, die der Drehachse der mindestens einen beweglichen Ventilkomponente entspricht oder zu dieser parallel ist, eingesetzt werden kann;
eine Dichtfläche zum dichtenden Eingreifen in eine mindestens teilweise eingesetzte Flüssigkeitsbehandlungskartusche (30; 32) entlang deren Umfang; und
einen Flüssigkeitskanal durch eine Wand (11) der Kammer (7),
wobei das Ventil dazu eingerichtet ist, einen Flüssigkeitsstrom durch den Flüssigkeitskanal zu regeln.

5. Behälter nach Anspruch 4,
wobei mindestens ein Teilstück des Flüssigkeitskanals durch einen Kartuschensitzteil (12) definiert ist, der in Bezug auf mindestens ein Teilstück der Kammerwand vorspringt,
wobei der Ventilkörper (15) in den Flüssigkeitskanal eingesetzt ist, und
wobei die mindestens eine bewegliche Ventilkomponente (16) durch und zwischen dem Ventilkörper (15) und mindestens einem Teilstück (13a,b) des Kartuschensitzteils (12) gehalten wird, wobei das mindestens eine Teilstück (13a,b) in den Flüssigkeitskanal vorspringt.

## Revendications

1. Soupape permettant de réguler un écoulement de liquide à travers un canal dans une paroi d'un siège de cartouche d'un système de traitement de liquide, la soupape incluant au moins :
un corps de soupape (15) définissant au moins un orifice ; et
au moins un composant de soupape mobile (16), pouvant se déplacer par rapport au corps de soupape (15),
le au moins un composant de soupape mobile (16) incluant une partie de régulation permettant d'obstruer sélectivement un écoulement de liquide à travers le au moins un orifice et une partie d'actionnement permettant de mettre en prise un dispositif d'actionnement de soupape lorsque le dispositif d'actionnement de soupape est inséré dans le siège de cartouche,
la partie de régulation pouvant se déplacer par rapport au corps de soupape (15) de façon à bloquer l'orifice à un degré dépendant de sa position, **caractérisée en ce que**
la partie d'actionnement inclut un élément de chacun d'au moins une paire d'un contour en spirale et d'une partie permettant de mettre en prise le contour en spirale et est comprise dans un mécanisme destiné à convertir un mouvement linéaire dans une direction axiale d'un dispositif d'actionnement de soupape en un mouvement rotatif du au moins un composant de soupape mobile (16) autour de l'axe ou d'un axe parallèle, et **en ce que**
une section du dispositif d'actionnement de soupape incluse dans le mécanisme inclut les autres éléments de la au moins une paire et peut être insérée dans une direction axiale à travers une ouverture de la soupape destinée à introduire un liquide dans la soupape,
le mécanisme incluant les parties permettant de mettre en prise un contour en spirale et incluant les contours en spirale.

2. Soupape selon la revendication 1,
dans laquelle les contours en spirale sont définis par des rainures en spirale (29a-f) destinées à recevoir les parties (41a, b ; 63a, b) permettant de mettre en prise le contour en spirale.

3. Soupape selon la revendication 1 ou 2,
dans laquelle le corps de soupape (15) définit un siège de soupape (21) destiné à recevoir la partie de régulation, siège de soupape (21) dans lequel l'orifice est ménagé.

4. Réservoir pour système de traitement de liquide, incluant :
un siège de cartouche, le siège de cartouche incluant :
une soupape selon l'une quelconque des revendications précédentes ;
une chambre (7) présentant une ouverture à une extrémité axiale à travers laquelle une cartouche de traitement liquide (30 ; 32) peut être insérée au moins partiellement dans une direction axiale par rapport à un axe de référence correspondant ou parallèle à l'axe de rotation du au moins un composant de soupape mobile ;
une surface d'étanchéité permettant de mettre en prise de manière étanche une cartouche de traitement de liquide au moins partiellement insérée (30 ; 32) le long de sa circonférence ; et
un canal de liquide à travers une paroi (11) de la chambre (7),
dans lequel la soupape est agencée de façon à réguler un écoulement de liquide à travers le canal de liquide.

5. Réservoir selon la revendication 4,
dans lequel au moins une section du canal de liquide est définie par une partie de siège de cartouche (12) faisant saillie par rapport à au moins une section de la paroi de la chambre,
dans lequel le corps de soupape (15) est inséré dans le canal de liquide, et
dans lequel le au moins un composant de soupape mobile (16) est retenu par et entre le corps de soupape (15) et au moins une section (13a, b) de la partie de siège de cartouche (12), laquelle au moins une section (13a, b) fait saillie dans le canal de liquide.
